# EUROPEAN PATENT APPLICATION

(11) **EP 4 242 949 A1**
(43) Date of publication of application: **13.09.2023**
(21) Application number: 21909200.4
(22) Date of filing: 13.12.2021
(51) Int. Cl.: G06Q 20/40

(54) **IDENTITY VERIFICATION METHOD, APPARATUS AND SYSTEM**

(30) Priority: 21.12.2020 CN 202011516393
(71) Applicant: Petal Cloud Technology Co., Ltd., Dongguan, Guangdong 523799 (CN)
(72) Inventor: LIANG, Songyu, Shenzhen, Guangdong 518129 (CN); LIU, Jianchang, Shenzhen, Guangdong 518129 (CN)
(74) Representative: Grünecker Patent- und Rechtsanwälte PartG mbB
(86) International application number: PCT/CN2021/137404
(87) International publication number: WO 2022/135203

(57) **Abstract**

An identity verification method, apparatus, and system are provided. The identity verification method includes: A first terminal device scans, when detecting that a user submits a product payment request, at least one surrounding second terminal device connected to the first terminal device. The first terminal device obtains user identity information of the at least one second terminal device. The first terminal device determines, based on the user identity information and a device type that are of the at least one second terminal device, whether a current device usage environment is trusted. If the current device usage environment is trusted, the first terminal device performs a password-free payment procedure, or pushes a payment procedure to a third terminal device. If the current device usage environment is untrusted, the first terminal device performs a non-password-free payment procedure. In this way, according to the identity verification method, a quantity of times that the user manually performs identity verification can be reduced or a quantity of times that the user manually scans QR codes to switch payment devices can be reduced while user payment security is ensured, and therefore, user payment experience is improved.

## Description

This application claims priority to Chinese Patent Application No. 202011516393.3, filed with the China National Intellectual Property Administration on December 21, 2020 and entitled "IDENTITY VERIFICATION METHOD, APPARATUS, AND SYSTEM", which is incorporated herein by reference in its entirety.

### TECHNICAL FIELD

This application relates to the field of terminal technologies, and in particular, to an identity verification method, apparatus, and system.

### BACKGROUND

There are various types of internet of things terminal devices that focus on different functions. Therefore, when performing some functions, some terminal devices can independently perform the functions while some other terminal devices need to perform the functions with assistance of other devices connected to the terminal devices. An in-app purchases (in-app purchases, IAP) function is used as an example: A terminal device like a mobile phone usually may complete an in-app purchases procedure independently. For example, when a user operates a mobile phone to purchase a product in an application program, the application program calls an in-app purchases program of the mobile phone. The in-app purchases program guides the user to perform identity verification such as fingerprint or password verification. After the identity verification succeeds, the application program submits a payment request to a payment server, and receives a payment result returned by the payment server, to complete a payment process. However, a smartwatch, a large-screen display device, or the like usually converts a payment into a QR code by using a uniform resource locator (uniform resource locator, URL) and displays the QR code on a display. A user may scan the QR code on the smartwatch or the large-screen display device by using a code scanning function of a mobile payment application, to transfer the payment by using the URL to a mobile phone side, and complete a payment process on the mobile phone side.

It can be learned that currently, implementations of in-app purchases for different types of terminal devices are different. However, regardless of the implementations, there is a problem that user experience is affected. For example, during each in-app purchase, a terminal device like a mobile phone needs to verify a user identity. As a result, there is a problem of repeated verification, and user payment experience is affected. In addition, a smartwatch and a large-screen display device need to implement the in-app purchase by using a mobile phone. A user needs to start a payment application on the mobile phone, scan a QR code of the smartwatch or the large-screen display device by using a code scanning function of the payment application, and perform identity verification in the payment application. Operations are excessively complex, and user experience is affected.

### SUMMARY

Embodiments of this application provide an identity verification method, apparatus, and system, to resolve a problem in a conventional technology that user payment experience is affected because a user needs to manually perform identity verification for an excessive quantity of times.

According to a first aspect, an embodiment of this application provides an identity verification method. The method includes: A first terminal device scans, when detecting that a user submits a product payment request, at least one surrounding second terminal device connected to the first terminal device. The first terminal device obtains user identity information of the at least one second terminal device. The first terminal device determines, based on the user identity information and a device type that are of the at least one second terminal device, whether a current device usage environment is trusted, where the device type is obtained from the second terminal device when the first terminal device establishes a connection to the second terminal device. If the current device usage environment is trusted, the first terminal device performs a password-free payment procedure, or the first terminal device pushes a payment procedure to a third terminal device, to enable the third terminal device to replace the first terminal device to perform a non-password-free payment procedure. If the current device usage environment is untrusted, the first terminal device performs a non-password-free payment procedure.

In this embodiment of this application, the first device may be, for example, a mobile phone or a large-screen display device. The second device may be various types of devices, for example, a mobile phone, a smartwatch, a large-screen display device, a smart speaker, a gateway device, and a smart appliance that surround the second device and that are connected to the second device. The user identity information may be, for example, a user account. When the user purchases a product by using the first device and needs to pay for the product, the first device may determine, based on a user account and a device type that are of a surrounding second device, whether the current device usage environment is trusted. For example, if user accounts of a plurality of second devices are the same as a user account of the first device, and the device type of the second device can further represent that the user is in a secure environment like home, the current device usage environment is trusted. The first device may perform the password-free payment procedure when determining that the current device usage environment is trusted. For example, if the first device is a mobile phone, the password-free payment procedure may be directly performed on the mobile phone, so that the user does not need to manually perform identity verification. If the first device is a large-screen display device, the payment procedure may be actively pushed to a mobile phone of the user, and then the password-free payment procedure is performed on the mobile phone. In this way, according to the identity verification method provided in this embodiment of this application, a quantity of times that the user manually performs identity verification can be reduced while user payment security is ensured, and therefore, user payment experience is improved.

In an implementation, the first terminal device stores a weight value of at least one device type, each device type includes one first weight value and one second weight value, and the first weight value of each device type is greater than the second weight value of the device type.

In an implementation, that the first terminal device determines, based on the user identity information and a device type that are of the at least one second terminal device, whether a current device usage environment is trusted includes: The first terminal device determines, from the at least one second terminal device, a trusted device whose user identity information is the same as that of the first terminal device. The first terminal device determines a weight value of each trusted device based on a device type of the trusted device. The first terminal device adds weight values of all trusted devices to obtain a score of the current device usage environment. The first terminal device determines, based on the score of the current device usage environment, whether the current device usage environment is trusted.

In an implementation, the weight value of the trusted device is a first weight value of the device type of the trusted device.

In an implementation, that the first terminal device determines, based on the user identity information and a device type that are of the at least one second terminal device, whether a current device usage environment is trusted includes: The first terminal device determines a weight value of each second terminal device based on the user identity information and the device type that are of the second terminal device. The first terminal device adds weight values of all second terminal devices to obtain a score of the current device usage environment. The first terminal device determines, based on the score of the current device usage environment, whether the current device usage environment is trusted.

In an implementation, that the first terminal device determines a weight value of each second terminal device based on the user identity information and the device type that are of the second terminal device includes: When user identity information of the first terminal device is the same as that of the second terminal device, the weight value of the second terminal device is equal to a first weight value of the device type of the second terminal device. Alternatively, when user identity information of the first terminal device is different from that of the second terminal device, the weight value of the second terminal device is equal to a second weight value of the device type of the second terminal device.

In an implementation, that the first terminal device determines, based on the score of the current device usage environment, whether the current device usage environment is trusted includes: If the score of the current device usage environment falls within a first score interval, the first terminal device determines that the current device usage environment is trusted. If the score of the current device usage environment falls within a second score interval, the first terminal device determines that the current device usage environment is untrusted. The first score interval is higher than the second score interval. In this way, the first terminal device may score the current device usage environment based on the user identity information, the type, a quantity, and the weight value of the second terminal device. A higher score of the current device usage environment indicates higher trustworthiness of the current device usage environment. When the score falls within the first score interval, it is determined that the current device usage environment is trusted.

In an implementation, the device type includes at least one or more of a large-screen display device, a smartwatch, a mobile phone, a smart speaker, and a notebook computer, where a first weight value of the large-screen display device is greater than a first weight value of another device type.

In an implementation, the second weight value of each device type is 0.

In an implementation, that the first terminal device pushes a payment procedure to a third terminal device includes: The first terminal device sends messenger information to the third terminal device, where the messenger information indicates the third terminal device to perform the non-password-free payment procedure. In this way, according to the method in this embodiment of this application, the payment procedure is pushed, so that a quantity of times that the user manually scans QR codes to switch payment devices can be reduced, and therefore, the user payment experience is improved.

In an implementation, the third terminal device is determined by the first terminal device from the at least one second terminal device, and the third terminal device includes a device of a specified type, a device specified by the user in advance, or a device that is currently in an active state.

In an implementation, that a first terminal device scans, when detecting that a user submits a product payment request, at least one surrounding second terminal device connected to the first terminal device includes: The first terminal device scans, based on a merchant authentication result of a payment server, the at least one surrounding second terminal device connected to the first terminal device, when detecting that the user submits the product payment request.

In an implementation, that the first terminal device scans, based on a merchant authentication result of a payment server, the at least one surrounding second terminal device connected to the first terminal device, when detecting that the user submits the product payment request includes: The first terminal device sends merchant authentication information to the payment server when detecting that the user submits the product payment request, to enable the payment server to perform validity check on a merchant based on a signature of the merchant authentication information, to obtain the merchant authentication result, where the merchant authentication result includes that the merchant is valid and that the merchant is invalid. The first terminal device receives the merchant authentication result sent by the payment server. The first terminal device scans, when the received merchant authentication result is that the merchant is valid, the at least one surrounding second terminal device connected to the first terminal device. In this way, the first terminal device scans the second terminal device only when the merchant is valid, to avoid some unnecessary scanning procedures.

In an implementation, that a first terminal device scans at least one surrounding second terminal device connected to the first terminal device includes: The first terminal device scans, by using a wireless communication module, at least one surrounding second terminal device wirelessly connected to the first terminal device.

In an implementation, the wireless communication module includes a wireless fidelity Wi-Fi module and/or a Bluetooth module, and that the first terminal device scans, by using a wireless communication module, at least one surrounding second terminal device wirelessly connected to the first terminal device includes: The first terminal device invokes the Wi-Fi module to scan at least one surrounding second terminal device connected to the first terminal device through Wi-Fi, and/or the first terminal device invokes the Bluetooth module to scan at least one surrounding second terminal device connected to the first terminal device through Bluetooth.

In an implementation, that the first terminal device obtains user identity information of the at least one second terminal device includes: The first terminal device sends user identity request information to each second terminal device. The first terminal device receives user identity information that is sent by each second terminal device in response to the user identity request information.

In an implementation, the first terminal device performs the password-free payment procedure when the first terminal device is a mobile phone and the current device usage environment is trusted.

In an implementation, the first terminal device pushes the payment procedure to the third terminal device when the first terminal device is the large-screen display device and the current device usage environment is trusted.

According to a second aspect, an embodiment of this application provides an identity verification apparatus, used as a first terminal device, where the apparatus includes a processor and a memory, a transceiver, and a memory and a processor. The memory includes program instructions. When the program instructions are run by the processor, the first terminal device is enabled to perform the method according to the first aspect and the implementations of the first aspect.

According to a third aspect, an embodiment of this application provides an identity verification system, including: a first terminal device and at least one second terminal device. The first terminal device is configured to scan, when detecting that a user submits a product payment request, at least one surrounding second terminal device connected to the first terminal device. The first terminal device is further configured to send user identity request information to each second terminal device found through scanning. The second terminal device is configured to send user identity information of the second terminal device to the first terminal device in response to the user identity request information. The first terminal device is further configured to determine, based on the user identity information and a device type that are of the at least one second terminal device found through scanning, whether a current device usage environment is trusted, where the device type is obtained from the second terminal device when the first terminal device establishes a connection to the second terminal device. The first terminal device is further configured to perform a password-free payment procedure when the current device usage environment is trusted, or push a payment procedure to a third terminal device, to enable the third terminal device to replace the first terminal device to perform a non-password-free payment procedure. The first terminal device is further configured to perform the non-password-free payment procedure when the current device usage environment is untrusted.

According to a fourth aspect, an embodiment of this application further provides a computer-readable storage medium. The computer-readable storage medium stores instructions. When the instructions are run on a computer, the computer is enabled to perform the methods according to the foregoing aspects and the implementations of the aspects.

According to a fifth aspect, an embodiment of this application further provides a computer program product including instructions. When the instructions are run on a computer, the computer is enabled to perform the methods according to the foregoing aspects and the implementations of the aspects.

According to a sixth aspect, an embodiment of this application further provides a chip system. The chip system includes a processor, configured to support the foregoing apparatus or system in implementing a function in the foregoing aspects, for example, generating or processing information in the foregoing method.

### BRIEF DESCRIPTION OF DRAWINGS

FIG. 1 is a schematic diagram of an identity verification interface according to an embodiment of this application;
FIG. 2 is a schematic diagram of an in-app purchases procedure completed by a smartwatch or a large-screen display device by using a mobile phone;
FIG. 3 is a schematic diagram of displaying a QR code by a large-screen display device;
FIG. 4 is a schematic diagram of a hardware structure of a terminal device according to an embodiment of this application;
FIG. 5 is a diagram of a networking scenario of an IoT network according to an embodiment of this application;
FIG. 6 is a schematic diagram of a software architecture of a terminal device according to an embodiment of this application;
FIG. 7 is a schematic diagram of a user purchasing a product in an application according to an embodiment of this application;
FIG. 8 is a schematic diagram of a payment-pending page according to an embodiment of this application;
FIG. 9A and FIG. 9B are a diagram of a time sequence in which a terminal device independently completes an in-app purchases procedure according to Embodiment 1 of this application;
FIG. 10 is a flowchart of step S 10 1 of an identity verification method according to Embodiment 1 of this application;
FIG. 11 is a flowchart of step S102 of an identity verification method according to Embodiment 1 of this application;
FIG. 12 is a schematic diagram of a user purchasing a product in an application according to an embodiment of this application;
FIG. 13A and FIG. 13B are a diagram of a time sequence in which a terminal device completes an in-app purchases procedure by using another device according to Embodiment 2 of this application;
FIG. 14 is a flowchart of a scenario in which an identity verification method is used for password changing or password retrieval according to an embodiment of this application;
FIG. 15 is a flowchart of a scenario in which an identity verification method is used for receiving of sensitive information according to an embodiment of this application; and
FIG. 16 is a schematic diagram of an identity verification apparatus according to an embodiment of this application.

### DESCRIPTION OF EMBODIMENTS

With the development of internet of things (IoT for short) technologies, a quantity of terminal devices owned by a user or a family is increasing, and types of the terminal devices are increasingly diversified. For example, the terminal devices owned by the user may include: a conventional terminal device like a mobile phone or a tablet computer, a wearable device like a band or a smartwatch, an audio interaction device like a smart speaker, a large-screen display device like a smart TV or a smart screen, a security protection device like a smart lock or a smart camera, a smart gateway device, and the like. These terminal devices are interconnected by using one or more communication protocols such as a wireless network, wireless fidelity (wireless fidelity, Wi-Fi), Bluetooth, a Bluetooth mesh network (Bluetooth mesh), and zigbee, to exchange instructions and data, and therefore jointly implement functions in various IoT scenarios.

Generally, different types of terminal devices have different physical forms, and focus on implementing different functions. For example, a mobile phone has high portability and powerful performance, and can implement many functions independently. However, functions such as heart rate detection and blood glucose detection need to be implemented by using another wearable device. A smart watch has high portability, but has a small screen, and is not as convenient as a terminal device like a mobile phone in operation. A smart screen has a large size, strongly belongs to a specific place, and is suitable for viewing audio and video content, but is not convenient enough in operation.

Because different types of terminal devices focus on different functions, when performing some functions, some terminal devices can independently perform the functions while some other terminal devices need to perform the functions with assistance of other devices connected to the terminal devices.

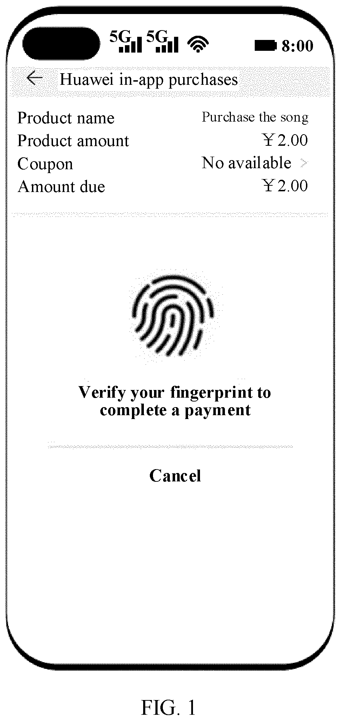

An in-app purchases IAP function as an example:
A terminal device like a mobile phone usually may complete an in-app purchases procedure independently. For example, when the user operates the mobile phone to purchase a product in an application program, the application program calls an in-app purchases program of the mobile phone. The in-app purchases program pops up an identity verification interface that is used for prompting the user to enter a payment password or verify a fingerprint and that is shown in FIG. 1. After the user enters the payment password or verifies the fingerprint, the application program submits a payment request to a payment server, and receives a payment result returned by the payment server, to complete a payment process.

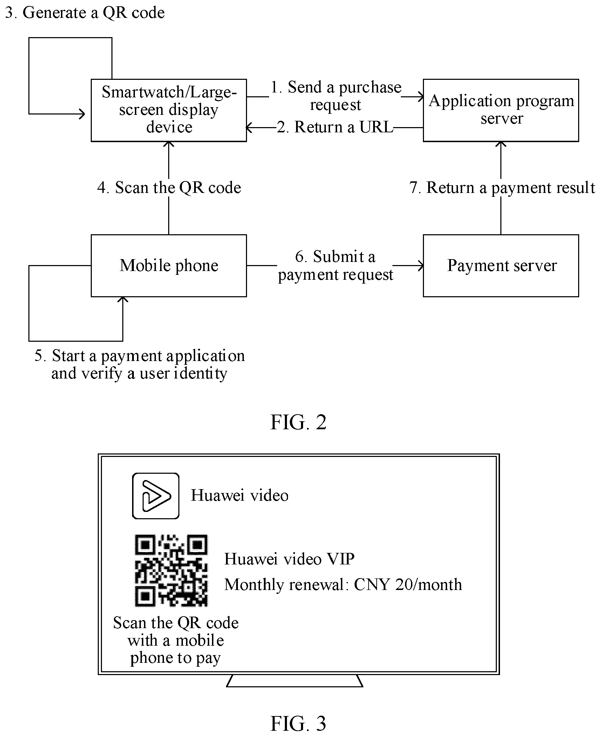

For a smartwatch and a large-screen display device, an in-app purchases procedure of the smartwatch and the large-screen display device may need to be implemented by using a terminal device connected to the smartwatch and the large-screen display device. FIG. 2 is a schematic diagram of an in-app purchases procedure completed by a smartwatch or a large-screen display device by using a mobile phone. Because the smartwatch has a small display, the smartwatch usually completes an in-app purchases procedure by using another terminal device like a mobile phone. When a user opens an application program in the smartwatch, and selects and confirms to purchase a product in the application program, as shown in FIG. 2, the smartwatch may send a purchase request to a server of the application program. After receiving the purchase request, the server of the application program generates a corresponding order, and then returns a payment corresponding to the order to the smartwatch by using a uniform resource locator (uniform resource locator, URL). The smartwatch converts the payment into a QR code by using the URL and displays the QR code on the display. In this case, the user may scan the QR code on the smartwatch by using a code scanning function of a mobile payment application, to transfer the payment to a mobile phone side by using the URL. The mobile phone starts, based on the payment, a payment application (like Huawei wallet) by using the URL, generates order information, such as a product name and price, and displays the order information to the user. After confirming product information and price, the user may tap a payment button (like continue payment and confirm payment) In this case, the payment application requires the user to perform identity verification, for example, entering a payment password or verifying a fingerprint. After the identity verification succeeds, the mobile phone submits a payment request to a payment server corresponding to the payment application. After completing payment processing, the payment server returns a payment result to the smartwatch.

In addition, the large-screen display device is operated by using a remote control. However, when the remote control is used for selecting a product and entering a payment password (for example, entering a number and a letter), an operation is inconvenient. Therefore, a manner similar to that of the smartwatch is usually used to complete an in-app purchases procedure by using another terminal device like a mobile phone. For example, as shown in FIG. 3, the large-screen display device displays, on a display, a QR code corresponding to a payment by using a URL, and a mobile payment application scans the QR code to complete a payment procedure.

Therefore, it can be learned that currently, implementations of in-app purchases for different types of terminal devices are different. However, regardless of the implementations, there is a problem that user experience is affected. For example, during each in-app purchase, a terminal device like a mobile phone needs to verify a user identity. As a result, there is a problem of repeated verification, and user payment experience is affected. In addition, a smartwatch and a large-screen display device need to implement the in-app purchase by using a mobile phone. A user needs to start a payment application on the mobile phone, scan a QR code of the smartwatch and the large-screen display device by using a code scanning function of the payment application, and perform identity verification in the payment application. Operations are excessively complex, and user experience is affected.

To improve user experience of an in-app purchases procedure, an embodiment of this application provides an identity verification method. The method is applicable to a terminal device. For example, the terminal device may include: a mobile phone, a tablet computer, a large-screen display device, a notebook computer, a desktop personal computer, a workstation, a smart speaker with a display, a smart alarm with a display, an electrical device with a display (for example: a smart refrigerator), an augmented reality (augmented reality, AR) device, a virtual reality (virtual reality, VR) device, a mixed reality (mixed reality, MR) device, and the like.

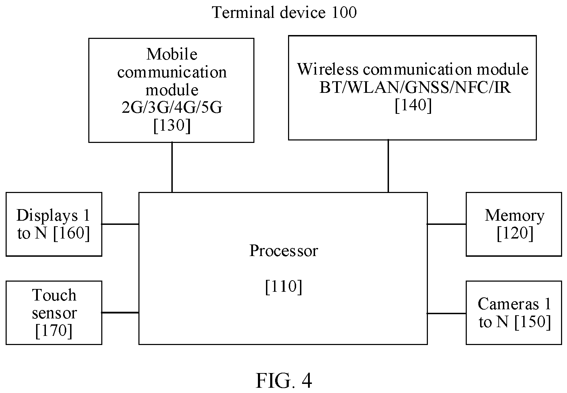

FIG. 4 is a schematic diagram of a hardware structure of a terminal device according to an embodiment of this application. As shown in FIG. 4, the terminal device 100 may include a processor 110, a memory 120, a mobile communication module 130, a wireless communication module 140, a camera 150, a display 160, a touch sensor 170, and the like.

The processor 110 may include one or more processing units. For example, the processor 110 may include an application processor (application processor, AP), a modem processor, a graphics processing unit (graphics processing unit, GPU), an image signal processor (image signal processor, ISP), a video codec, a digital signal processor (digital signal processor, DSP), a baseband processor, and/or a neural-network processing unit (neural-network processing unit, NPU), and the like. Different processing units may be independent components, or may be integrated into one or more processors, for example, integrated into a system on a chip (system on a chip, SoC).

The memory 120 can be configured to store data and computer-executable program code, and the executable program code includes instructions. The memory 120 may include one or more storage units, for example, may include a volatile memory (volatile memory) like a dynamic random access memory (dynamic random access memory, DRAM) or a static random access memory (static random access memory, SRAM). The memory 120 may further include a non-volatile memory (non-volatile memory, NVM) like a read-only memory (read-only memory, ROM) or a flash memory (flash memory). The processor 110 runs instructions stored in the memory 120 and/or instructions stored in a memory disposed in the processor, to perform various function applications of the terminal device 100 and data processing.

The mobile communication module 130 may provide a cellular mobile communication solution that is applied to the terminal device 100 and that includes 2G/3G/4G/5G or the like. The mobile communication module 130 may include at least one filter, a switch, a power amplifier, a low noise amplifier (low noise amplifier, LNA), and the like. The mobile communication module 130 may receive an electromagnetic wave by using an antenna 141, perform processing such as filtering and amplification on the received electromagnetic wave, and transmit a signal to a modem processor for demodulation. In some embodiments, at least some functional modules in the mobile communication module 130 may be disposed in the processor 110. In some embodiments, at least some functional modules of the mobile communication module 130 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which includes but is not limited to a loudspeaker, a receiver, or the like), or displays an image or a video on the display 160. In some embodiments, the modem processor may be an independent component. In some other embodiments, the modem processor may be independent of the processor 110, and is disposed in a same device as the mobile communication module 130 or another functional module.

The wireless communication module 140 may include a Wi-Fi module, a Bluetooth module, a global navigation satellite system (global navigation satellite system, GNSS) module, a near field communication (near field communication, NFC) module, an infrared (infrared, IR) module, and the like. The wireless communication module 140 may be one or more components where at least one of the foregoing modules is integrated.

The camera 150 is configured to capture a static image or a video. The camera 150 includes a lens and a photosensitive element. An optical image of an object is generated by using the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, like RGB, YUV, or RYYB. In some embodiments, the terminal device 100 may include one or N cameras 150, where N is a positive integer greater than 1.

The display 160 is configured to display an image, a video, and the like. The display 160 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, quantum dot light-emitting diodes (quantum dot light-emitting diodes, QLED), or the like. In some embodiments, the terminal device 100 may include one or N displays 160, where N is a positive integer greater than 1.

The touch sensor 170 may be disposed on the display 160, and the touch sensor 170 and the display 160 form a touchscreen, which is also referred to as a "touch screen". The touch sensor 170 is configured to detect a touch operation performed on or near the touch sensor. The touch sensor 170 may transfer the detected touch operation to the application processor, to determine a type of a touch event. A visual output related to the touch operation may be provided through the display 160. In some other embodiments, the touch sensor 170 may alternatively be disposed on a surface of the terminal device 100 at a location different from a location of the display 160.

It can be understood that the structure illustrated in this embodiment of this application does not impose a specific limitation on the terminal device 100. In some other embodiments of this application, the terminal device can include more or fewer components than those shown in the figure, or some components can be combined, or some components can be split, or a different component arrangement can be used. The components shown in the figure may be implemented in hardware, software, or a combination of software and hardware.

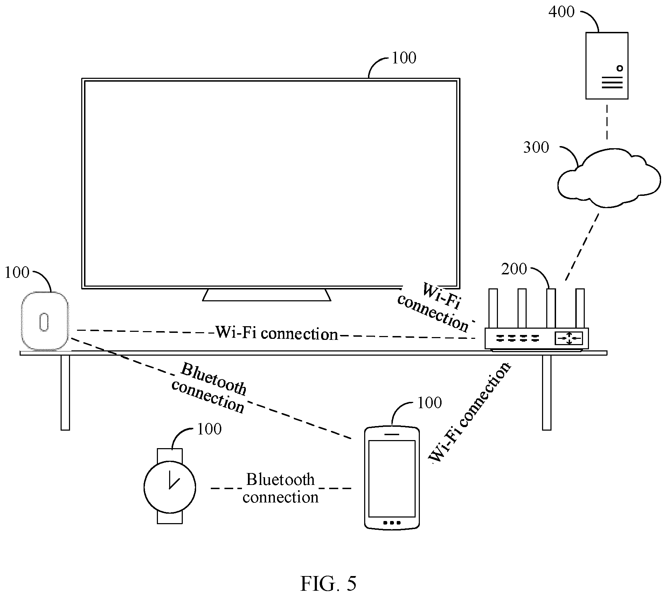

FIG. 5 is a diagram of a networking scenario of an IoT network according to an embodiment of this application. As shown in FIG. 5, the IoT network may include one or more terminal devices 100. Some or all of the terminal devices 100 may be connected to a same Wi-Fi network by using a router 200 or the like, or may be interconnected by using one or more communication protocols such as Bluetooth, Bluetooth mesh, and zigbee, to exchange instructions and data. In addition, some terminal devices 100 may further access an internet 300 by using a Wi-Fi network, a cellular mobile network, or the like, and establish a communication connection to a device like a server 400 in the internet. A terminal device configured to implement an identity verification method provided in embodiments of this application may be any terminal device 100 in the IoT network.

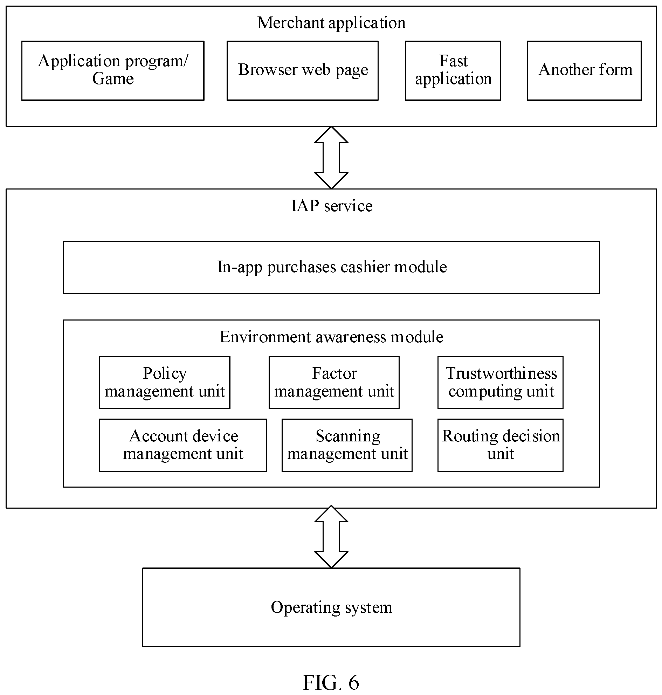

FIG. 6 is a schematic diagram of a software architecture of a terminal device according to an embodiment of this application. The software architecture may run in the terminal device, to implement an identity verification method provided in embodiments of this application. As shown in FIG. 6, the software architecture from a bottom layer to a top layer may sequentially include: an operating system, an IAP service, and a merchant application. Specifically:
The merchant application may include various application programs that provide a product purchase function, game applications, browser web pages, fast applications, and other implementation forms, for example, video and audio applications that provide functions such as paid on-demand and video membership, and game applications that provide functions such as point card recharge and virtual item purchase in games.

The IAP service is used for implementing an in-app purchases function of the terminal device. When a user purchases a product in a merchant application, the application completes, by using an application programming interface (API) provided by the IAP service, determining and decision-making procedures, including identity verification, in a payment procedure for the IAP service.

FIG. 6 further shows an example of a logical architecture of the IAP service. The IAP service may include an in-app purchases cashier module and an environment awareness module. In addition, in an example implementation, the environment awareness module may further include, for example, a policy management unit, a factor management unit, a trustworthiness computing unit, an account device management unit, a scanning management unit, and a routing decision unit. Composition of units in the environment awareness module is not specifically limited in this embodiment of this application. In some other implementations, the environment awareness module may include fewer units or more units, or functions of a plurality of units may be integrated into one unit for implementation. None of this goes beyond the protection scope of embodiments of this application.

It should be additionally noted that the IAP service in this embodiment of this application may be a part of a system service provided by the terminal device. The system service may be, for example, a Huawei mobile service (Huawei mobile services, HMS) or a Google mobile service (Google mobile services, GMS). This is not limited in this embodiment of this application.

The operating system is used for managing a hardware resource, a software resource, a user account, and the like of a computer. Terminal devices of different types and manufacturers may run different operating systems, such as harmony operating systems Harmony OS, Google fuchsia, Android, and iOS. This is not limited in this embodiment of this application.

It should be additionally noted that, in-app purchases in this embodiment of this application may support at least three types of commodities, which are respectively a consumable product, a non-consumable product, and a subscription product. Details are shown in Table 1 below.

| **Description example of product definition** | **Product definition** | **Description Example** |
|---|---|---|
| Consumable product | A consumable product can only be used once and expires immediately after consumption and needs to be purchased again | Extra lives gems, and the like in a game |
| Non-consumable product | Non-consumable product is purchased at one time, permanently owned, and does not need to be consumed | Extra game levels in a game or permanent premium membership in an application |
| Subscription product | A user can access value-added functions or content within a period of time after purchasing a service. After the period ends, the user can automatically renew the service for a next period | Non-permanent premium membership in an application like a monthly video membership |

With reference to a specific application scenario, the following specifically describes an identity verification method provided in embodiments of this application. It should be noted herein that, in embodiments of this application, a terminal device corresponds to a first terminal device in the claims, another device corresponds to a second terminal device in the claims, and a target device corresponds to a third terminal device in the claims.

### Embodiment 1

Embodiment 1 of this application is applied to a scenario in which a terminal device independently completes an in-app purchases procedure.

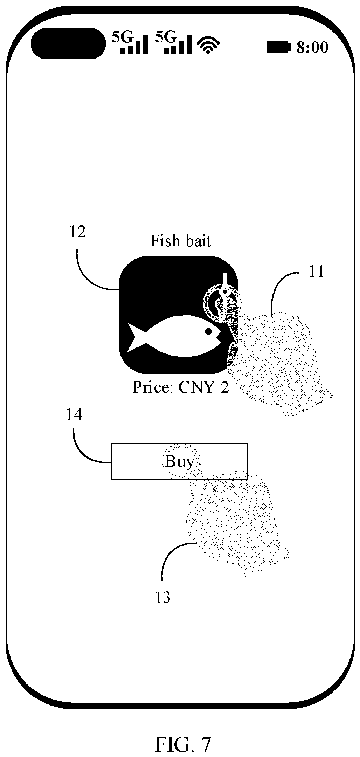

For example, when a merchant application is a game application, and a user purchases a virtual item in a game, as shown in FIG. 7, the user may tap 11 an icon 12 of the virtual item on a game interface to select the virtual item. Next, the user may tap 13 a "Buy" button 14 in a popped-up option on the game interface. In this case, the game application invokes an IAP service through an API provided by the IAP service, and transfers information such as a product name, an amount, a payment currency, a user ID, and a merchant ID to the IAP service. After the IAP service is invoked, an order is generated based on the received information, and a payment-pending page of the order is displayed on a display of the terminal device.

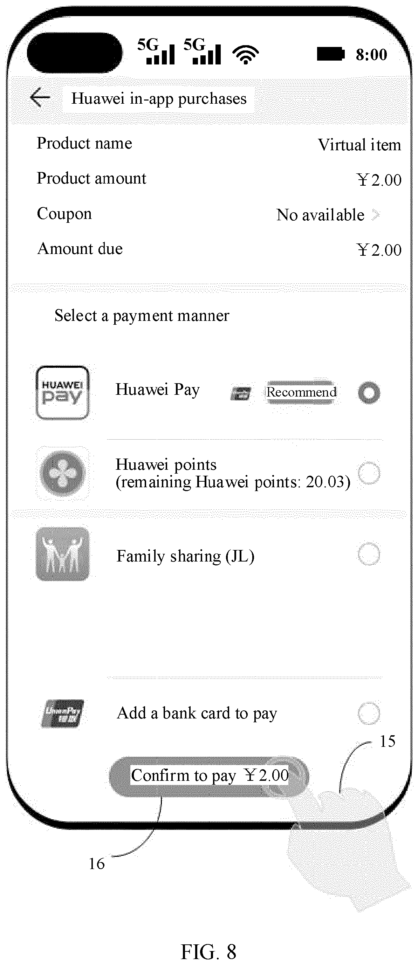

FIG. 8 is a schematic diagram of a payment-pending page according to an embodiment of this application. As shown in FIG. 8, the payment-pending page may include, for example, information such as a product name, a product amount, coupon information, and an amount due, and information about optional payment manners, for example, payment by using Huawei Pay, payment by using Huawei points, and payment by using a bank card. When the IAP service detects that the user selects a payment manner on the payment-pending page and taps 15 "Confirm to pay" 16, it means that the IAP service detects that the user has submitted a product payment request.

Based on the logical architecture of the IAP service shown in FIG. 6, functions of the IAP service to generate the order, display the payment-pending page, and detect the product payment request submitted by the user may all be implemented by an in-app purchases cashier module. For example, when the user taps the "Buy" button on the game interface, the game application invokes the in-app purchases cashier module of the IAP service through an API provided by the IAP service. The in-app purchases cashier module displays the payment-pending page on the display of the terminal device based on the information transferred by the game application. Then, when the in-app purchases cashier detects that the user selects a payment manner on the payment-pending page and taps "Confirm to pay", it means that the in-app purchases cashier detects that the user has submitted the product payment request.

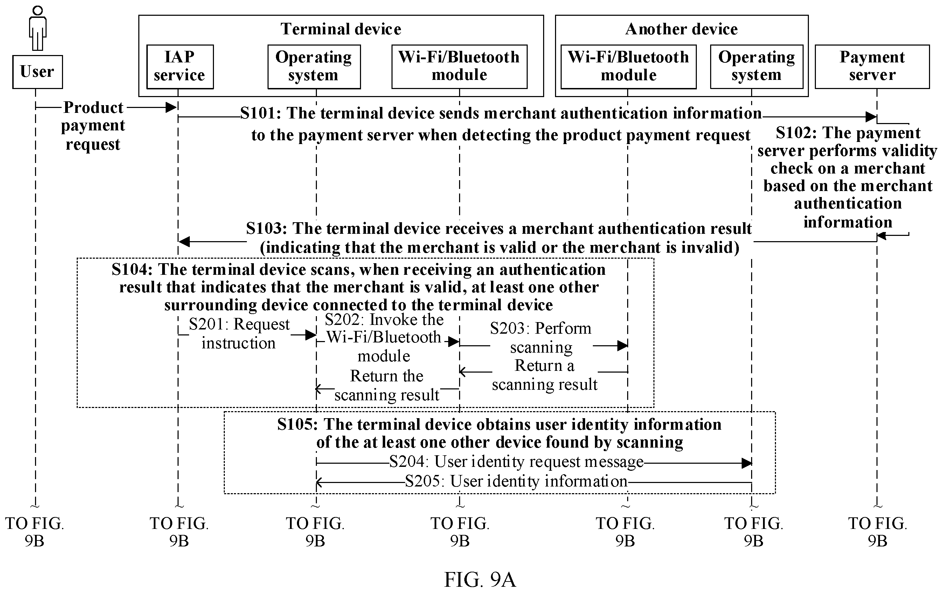

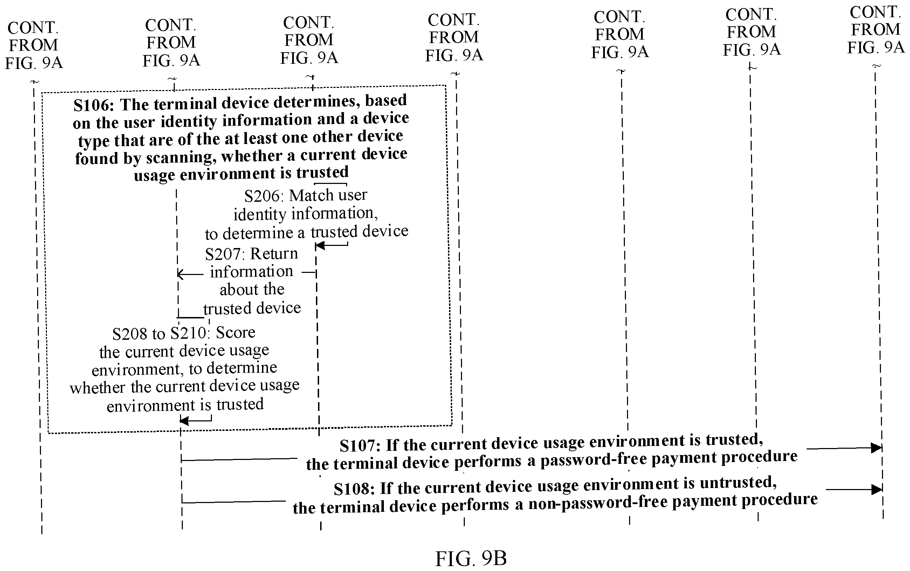

FIG. 9A and FIG. 9B are a diagram of a time sequence in which a terminal device independently completes an in-app purchases procedure according to this embodiment of this application.

As shown in FIG. 9A and FIG. 9B, that the terminal device independently completes the in-app purchases procedure may include the following step S101 to step S109.

Step S101: An IAP service of the terminal device sends merchant authentication information to a payment server when detecting that a user submits a product payment request.

During specific implementation, step S101 may be performed by the IAP service of the terminal device. The IAP service sends the merchant authentication information to the payment server when detecting that the user submits the product payment request. The merchant authentication information may be specifically generated by an in-app purchases cashier module of the IAP service and sent to the payment server.

The merchant authentication information may include, for example, one or more pieces of information such as a product name, an amount, a payment currency, a user ID, a merchant ID, a type of the terminal device, and a device ID. The information may be used by the payment server to perform validity check on a merchant, and report specific content of a product to be purchased by the user to a merchant server associated with the merchant ID, to request the merchant server to deliver the product.

In an implementation, to improve security of in-app purchase, data may be encrypted and transmitted between the terminal device and the payment server. For example, the data is encrypted and transmitted by using a transport layer security (transport layer security, TLS) protocol. For example, the IAP service sends the merchant authentication information to the payment server. The in-app purchases cashier module in the IAP service may encrypt and sign the merchant authentication information by using an asymmetric encryption algorithm (for example, an RSA algorithm) or a symmetric encryption algorithm (for example, an AES algorithm), and then send the signed merchant authentication information to the payment server. In this way, it can be ensured that the merchant request information is not intercepted or tampered with during transmission.

During specific implementation, the payment server may allocate a group of keys to each merchant in advance. Different merchants have different keys. The key may be a symmetric key or an asymmetric key. The asymmetric key is used as an example. The group of keys includes one public key and one private key. The payment server may distribute the private key of each merchant to the terminal device in advance, and the payment server stores the public key. When the IAP service detects the product payment request, the IAP service may determine a corresponding private key based on the merchant ID, use the private key to encrypt and sign the merchant authentication information, and send the encrypted and signed merchant authentication information to the payment server.

Step S102: The payment server performs validity check on the merchant based on the merchant authentication information after receiving the merchant authentication information.

During specific implementation, the payment server may verify, based on the merchant ID, whether the merchant is a merchant that has been registered in the payment server. When the merchant authentication information is encrypted information that has been signed, the payment server may verify validity of the merchant by performing signature check on the merchant authentication information. For example, when the merchant authentication information is signed by using the RSA algorithm, the payment server may decrypt the merchant authentication information by using a public key. If information such as the merchant ID is successfully decrypted, and it is determined, based on the merchant ID, that the merchant is a merchant that has been registered in the payment server, the merchant is authenticated as valid. After completing validity check on the merchant, the payment server may send, to the terminal device, a merchant authentication result obtained through the check.

Step S 103: The terminal device receives the merchant authentication result sent by the payment server.

It may be understood that the merchant authentication result may have two cases: One is that the merchant is valid, and the other is that the merchant is invalid. When the authentication result is that the merchant is invalid, the terminal device displays payment failure information on a display, and the payment failure information may be generated by the in-app purchases cashier module.

Step S104: The terminal device scans, when receiving an authentication result that indicates that the merchant is valid and that is sent by the payment server, at least one other surrounding device connected to the terminal device.

During specific implementation, the terminal device may invoke a Wi-Fi module to scan another surrounding device connected to the terminal device through Wi-Fi, and/or may invoke a Bluetooth module to scan another surrounding device connected to the terminal device through Bluetooth. If a device connected to the terminal device through Wi-Fi or another device connected to the terminal device through Bluetooth is found through scanning, information such as a device identifier and a device type of the device may be recorded. It should be additionally noted herein that, that the terminal device is connected to another device through Wi-Fi may include that the terminal device and the another device are connected to a same wireless access point (wireless access point, WAP), or that the terminal device is connected to the another device through a Wi-Fi direct connection.

Further, as shown in FIG. 9A, in an implementation, step S104 may be implemented by cooperation of software modules such as the IAP service and an operating system that are of the terminal device and a hardware module like the Wi-Fi module and/or the Bluetooth module. Specifically, step S104 may include the following step S201 to step S203.

Step S201: The IAP service may send, to the operating system when receiving the authentication result that indicates that the merchant is valid, a request instruction used for obtaining user identity information of the another surrounding device.

In an implementation, step S201 may be performed by a scanning management unit of the IAP service.

Step S202: When receiving the request instruction from the IAP service, the operating system may invoke the Wi-Fi module of the terminal device to scan the another surrounding device connected to the terminal device through Wi-Fi, and/or may invoke the Bluetooth module to scan the another surrounding device connected to the terminal device through Bluetooth.

Step S203: The Wi-Fi module and/or the Bluetooth module of the terminal device perform/performs a scanning process, and send/sends a scanning result to the operating system.

During specific implementation, the Wi-Fi module and/or the Bluetooth module of the terminal device may scan, by sending or receiving a frame signal, whether there is another surrounding device that enables a Wi-Fi hardware function and/or a Bluetooth hardware function and that is connected to the terminal device.

Optionally, the scanning result may include a device identifier and a device type that are of the another device connected to the terminal device.

The device identifier may be, for example, a terminal model like HUAWEI Mate 40 Pro, HUAWEI WATCH GT, HUAWEI Vision V65, HUAWEI Sound, HUAWEI AX3 Pro, or HUAWEI MateBook. In addition to the terminal model, the device identifier may alternatively be other information, for example, a MAC address or a user-defined name of a mobile phone, used for distinguishing between different devices.

The device type may include, for example, one or more of a mobile phone, a tablet computer, a large-screen display device, a smartwatch, a smart band, a smart speaker, a notebook computer, a smart home device, and another type of device. A device type classification manner is not specifically limited in this application. For example, in some embodiments, more device types such as a gateway device may be included, or fewer device types may be included. For another example, in some other embodiments, device types may be classified based on a coarser granularity. For example, the smartwatch and the smart band may be classified into smart wearable devices. Alternatively, the device types may be classified based on a finer granularity. For example, the smart home device may be specifically classified into a smart air conditioner, a smart fan, and the like.

In some implementations, the operating system may generate a first device list based on the scanning result returned by the Wi-Fi module and/or the Bluetooth module. The first device list may include information about device identifiers and device types of all other devices found by the terminal device through scanning. For example, the first device list is shown in Table 1.

**Table 1**

| Device identifier | Device type |
|---|---|
| HUAWEI Mate 40 Pro | Mobile phone |
| HUAWEI WATCH GT | Smartwatch |
| HUAWEI Vision V65 | Large-screen display device |
| HUAWEI Sound | Smart speaker |
| HUAWEI AX3 Pro | Router |
| HUAWEI MateBook | Notebook |
| ... | ... |

It should be added that, based on a different quantity of other surrounding devices connected to the terminal device, the terminal device may find one or more other devices through scanning, or may not find any other device through scanning. When the terminal device does not find any other device through scanning, the terminal device performs a non-password-free payment procedure. In the non-password-free payment procedure, the terminal device guides the user to perform identity verification such as fingerprint verification, payment password input, or face verification. After the identity verification succeeds, the payment procedure is completed.

During specific implementation, if the Wi-Fi module and/or the Bluetooth module do/does not find any other device through scanning, data returned by the Wi-Fi module and/or the Bluetooth module to the operating system is empty. The operating system may notify the IAP service of a result indicating that no other device is found through scanning. When receiving the result indicating that no other device is found through scanning, the IAP service performs the non-password-free payment procedure.

Step S105: The terminal device obtains user identity information of the at least one other device found through scanning.

During specific implementation, the terminal device may send a user identity request message to each other device found through scanning. After receiving the user identity request message, each other device sends user identity information of each other device to the terminal device.

A format and specific content of the user identity request message may be preconfigured by the terminal device and each other device, for example, configured in an operating system of the device before the device is delivered from a factory, or configured in an operating system by upgrading a system subsequently. This is not specifically limited in this embodiment of this application. Any message that can enable another device to identify that the message is used for obtaining user identity information of the another device may be used as the user identity request information.

User identity information is used for identifying a user to which a device belongs. Different users have different user identity information. When a user has a plurality of devices, these devices have the same user identity information.

Usually, to use a function and a service provided by a terminal device, a user registers an account on the terminal device and logs in to the terminal device using the account, where the account may be, for example, a Huawei account used for using an HMS service and the like provided by Huawei, a Google account used for using a GMS service and the like provided by Google, or an Apple ID used for using a service and the like provided by Apple. In this embodiment of this application, these accounts may be used as the user identity information.

Further, as shown in FIG. 9A, in an implementation, step S105 may be implemented by cooperation of a software module like the operating system and the hardware module like the Wi-Fi module and/or the Bluetooth module. Specifically, step S105 may include the following step S204 to step S205.

Step S204: The operating system sends the user identity request message to each other device found through scanning.

During specific implementation, the operating system sends the user identity request message based on a Wi-Fi or Bluetooth connection between the terminal device and each other device. For example, when the terminal device is connected to each other device through Wi-Fi, the operating system invokes the Wi-Fi module to send the user identity request message to each other device. Each other device receives the user identity request message through the Wi-Fi module and reports the user identity request message to an operating system of each other device. For another example, when the terminal device is connected to each other device through Bluetooth, the operating system invokes the Bluetooth module to send the user identity request message to each other device. Each other device receives the user identity request message through the Bluetooth module, and reports the user identity request message to an operating system of each other device.

Step S205: The operating system of each other device sends user identity information of each other device to the terminal device in response to the user identity request message.

During specific implementation, the operating system of each other device sends the user identity information based on the Wi-Fi or Bluetooth connection between the terminal device and each other device. For example, when each other device is connected to the terminal device through Wi-Fi, the operating system of each other device invokes a Wi-Fi module of each other device to send the user identity information to the terminal device. The terminal device receives the user identity information through the Wi-Fi module of the terminal device, and reports the user identity information to the operating system of the terminal device. For another example, when each other device is connected to the terminal device through Bluetooth, the operating system of each other device invokes a Bluetooth module to send the user identity information to the terminal device. The terminal device receives the user identity information through the Bluetooth module of the terminal device, and reports the user identity information to the operating system of the terminal device.

In some implementations, the operating system of the terminal device may generate a second device list based on the received user identity information. The second device list may include information about device identifiers and device types, user identity information, and the like of all other devices found by the terminal device through scanning. When the user identity information is a Huawei account, the second device list is shown in Table 2.

**Table 2**

| Device identifier | Device type | Huawei account |
|---|---|---|
| HUAWEI Mate 40 Pro | Mobile phone | USER01 |
| HUAWEI WATCH GT | Smartwatch | USER01 |
| HUAWEI Vision V65 | Large-screen display device | USER01 |
| HUAWEI Sound | Smart speaker | USER01 |
| HUAWEI AX3 Pro | Router | USER02 |
| HUAWEI MateBook | Notebook | USER01 |
| ... | ... | |

Step S106: The terminal device determines, based on the user identity information and a device type that are of the at least one other device found through scanning, whether a current device usage environment is trusted.

During specific implementation, the terminal device may score the current device usage environment of the terminal device according to a preconfigured decision rule and based on the device type and the user identity information that are of the at least one other device. If a score of the current device usage environment falls within a preset first score interval, it is determined that the current device usage environment is trusted. Alternatively, if a score of the current device usage environment falls within a preset second score interval, it is determined that the current device usage environment is untrusted. The first score interval and the second score interval may be different score intervals.

Further, as shown in FIG. 9B, in an implementation, step S106 may be implemented by cooperation of the software modules such as the IAP service and the operating system of the terminal device. Specifically, step S106 may include the following step S206 to step S210.

Step S206: The operating system of the terminal device matches, with user identity information of the terminal device, user identity information of each other device found through scanning, to determine, from other devices, a trusted device whose user identity information is the same as the user identity information of the terminal device.

It may be understood that when user identity information of one or more other devices is the same as the user identity information of the terminal device, the operating system of the terminal device can determine one or more trusted devices. When there is no other device whose user identity information is the same as the user identity information of the terminal device, the operating system of the terminal device can determine that a quantity of trusted devices is 0. When determining that the quantity of trusted devices is 0, the operating system of the terminal device may notify the IAP service of information that the quantity of trusted devices is 0. When receiving the information that the quantity of trusted devices is 0, the IAP service directly determines that the current device usage environment is untrusted.

In an implementation, the operating system of the terminal device may generate a third device list based on a result of matching the user identity information of the terminal device with that of the other devices. The third device list may include information about a device identifier and a device type that are of the trusted device, user identity information, and the like. When the user identity information is a Huawei account, the device list is shown in Table 3.

**Table 3**

| Device identifier | Device type | Huawei account |
|---|---|---|
| HUAWEI Mate 40 Pro | Mobile phone | USER01 |
| HUAWEI WATCH GT | Smartwatch | USER01 |
| HUAWEI Vision V65 | Large-screen display device | USER01 |
| HUAWEI Sound | Smart speaker | USER01 |
| HUAWEI MateBook | Notebook | USER01 |
| ... | ... | |

Step S207: The operating system of the terminal device sends information such as the device type of the trusted device to the IAP service.

In an implementation, the operating system of the terminal device may send the third device list to the IAP service.

Step S208: The IAP service scores the current device usage environment based on the device type of the trusted device and a weight value corresponding to a preset device type.

In an implementation, a user information management unit of the IAP service is configured to receive and record the information such as the device type of the trusted device, for example, receive and store the third device list.

In an implementation, a factor management unit may preconfigure a weight value of each device type, each device type may include a first weight value and a second weight value, and the first weight value of each device type is greater than the second weight value of the device type. For example, a first weight value of a large-screen display device is 10, and a second weight value of the large-screen display device is 0. A first weight value of a smartwatch is 3, and a second weight value of the smartwatch is 0. The first weight value is used when the user identity information of the terminal device is the same as that of another device (for example, login using a same account), and the first weight value is used when the user identity information of the terminal device is different from that of the another device (for example, login using different accounts). Usually, the first weight value of each device type may be greater than 0, and the second weight value of each device type may be equal to 0 or any value less than the first weight value.

In an implementation, it is considered that the large-screen display device is usually fixedly disposed and strongly belongs to a specific place, for example, the large-screen display device may be disposed at a home of a user. Therefore, the first weight value of the large-screen display device is higher than a first weight value of another device type.

For example, the user identity information is a Huawei account, and weight value information configured by the factor management unit may be implemented by using the following code. A "login using a same account" field corresponds to the first weight value of each device type, and a "login using different accounts" field corresponds to the second weight value of each device type.

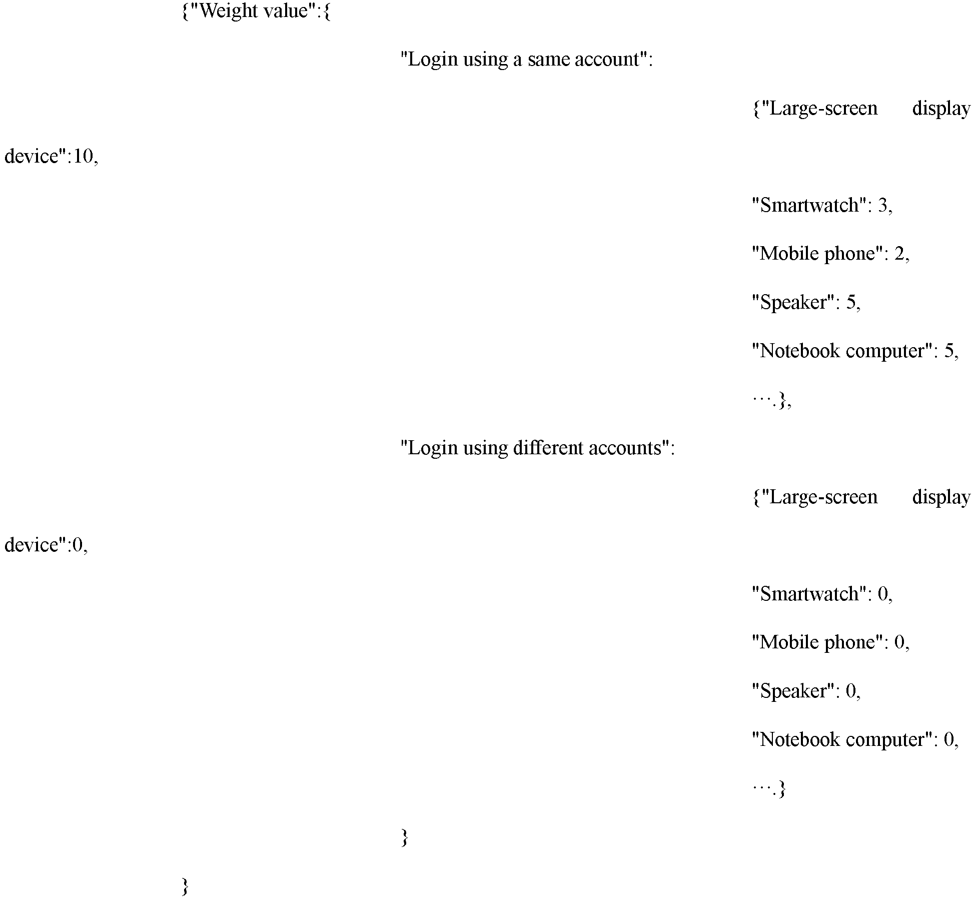

In an implementation, a policy management unit may preconfigure different payment scenarios and payment policies corresponding to different scores of the current device usage environment in the scenarios.

For example, the payment scenarios may include, for example, a scenario in which the terminal device independently completes in-app purchase, and a scenario in which the terminal device completes in-app purchases by using another device.

The scenario in which the terminal device independently completes in-app purchase may include a "password-free payment policy", and the scenario in which the terminal device completes in-app purchases by using another device may include a "cashier push policy". Embodiment 1 of this application corresponds to the scenario in which the terminal device independently completes in-app purchase. Therefore, only a payment policy in the scenario in which the terminal device independently completes in-app purchase is discussed herein. The scenario in which the terminal device completes in-app purchases by using another device is specifically described in Embodiment 2 of this application.

For example, the payment scenario configured by the policy management unit may be implemented by using the following code:

```
          {"Scenario in which a terminal device independently
completes in-app purchase": "Password-free payment
          policy",
           "Scenario in which a terminal device completes
in-app purchases by using another device": "Cashier push
           policy" }
```

In an implementation, based on the weight value information configured by the factor management unit, in the "password-free payment policy", a score of the current device usage environment may be obtained by a trustworthiness computing unit through calculation.

For example, when the trusted device includes only one large-screen display device, a first weight value of the large-screen display device is 10. Therefore, a score of the current device usage environment is 10. When the trusted device includes one smartwatch and one mobile phone, a first weight value of the smartwatch is 3, and a first weight value of the mobile phone is 2. Therefore, a score of the current device usage environment is 3 + 2 = 5 points. When the trusted device includes a smartwatch and a smart speaker, a first weight value of the smartwatch is 3, and a first weight value of the smart speaker is 5. Therefore, a score of the current device usage environment is 3 + 5 = 8 points. If no trusted device is found through scanning, a score of the current device usage environment is 0.

Step S209: If the score of the current device usage environment falls within the first score interval, the IAP service determines that the current device usage environment is trusted.

Step S210: If the score of the current device usage environment falls within the second score interval, the IAP service determines that the current device usage environment is untrusted.

In an implementation, step S209 and step S210 may be performed by the policy management unit of the IAP service according to a payment policy configured by the policy management unit.

For example, the payment policy configured by the policy management unit may be implemented by using the following code:

```
          {"Password-free payment policy":
          {"0∼5": "Stop", "5~": "Go" },
          "Cashier push policy":
          {"0∼5": "Stop", "5~": "Go" },
```

}In the "password-free payment policy", ""0-5": "Stop"" indicates that when the score of the current device usage environment is between 0 and 5 points (which corresponds to the second score interval), the policy management unit determines that the current device usage environment is untrusted. ""5~": "Go"" indicates that when the score of the current device usage environment is greater than a score interval of 5 points (which corresponds to the first score interval), the policy management unit determines that the current device usage environment is trusted. It can be seen herein that the first score interval may be higher than the second score interval.

Step S107: If the current device usage environment is trusted, the terminal device performs a password-free payment procedure.

Step S108: If the current device usage environment is untrusted, the terminal device performs a non-password-free payment procedure.

In an implementation, based on the logical architecture of the IAP service shown in FIG. 6, step S107 may be performed by a routing decision unit and an in-app purchases cashier module that are of the IAP service.

Specifically, the routing decision unit obtains a decision result of the policy management unit about whether the current device usage environment is trusted. If the current device usage environment is trusted, the routing decision unit sends a password-free payment indication to the in-app purchases cashier module. Alternatively, if the current device usage environment is untrusted, the routing decision unit sends a non-password-free payment indication to the in-app purchases cashier module.

When receiving the password-free payment indication, the in-app purchases cashier module performs the password-free payment procedure, that is, skips an identity verification procedure like a fingerprint verification interface, a payment password input interface, or face verification, and does not need to display an interface used for guiding the user to perform identity verification, but directly submits a payment settlement request to a payment server. When receiving the non-password-free payment indication, the in-app purchases cashier module performs the non-password-free payment procedure, and first generates a fingerprint verification interface, a payment password input interface, or a face verification interface, to guide the user to perform identity verification such as fingerprint verification, payment password input, or face verification. After the identity verification of the user succeeds, the in-app purchases cashier module submits a payment settlement request to a payment server. If the identity verification of the user fails, the in-app purchases cashier module terminates the payment procedure, and displays payment failure information.

When receiving the payment settlement request, a wallet server completes subsequent payment processing steps of the payment, and notifies the in-app purchases cashier module and an application program server of a payment result. The in-app purchases cashier module receives the payment result, and may further notify an application program of the payment result. Next, the application program may initiate a purchase status query request to an application server, to enable the application program server to return a purchase status of a product, for example, delivery statuses of a consumable product and a non-consumable product, or a subscription status of a subscription product.

It can be learned from the foregoing technical solutions that the identity verification method provided in Embodiment 1 of this application is applicable to the scenario in which the terminal device independently completes in-app purchase. When detecting that the user submits a product payment request, the terminal device scans other surrounding devices that have been connected to the terminal device, and obtains user identity information of these devices. Then, the terminal device determines, based on the user identity information and device types that are of the other devices, whether the current device usage environment is trusted. If the current device usage environment is trusted, the password-free payment procedure is performed. In this way, according to the identity verification method provided in this embodiment of this application, a quantity of times that the user manually performs identity verification can be reduced while user payment security is ensured, and therefore, user payment experience is improved.

In some implementations, the scanning management unit of the IAP service may configure a plurality of scanning policies for the operating system. For example:
a. The operating system is indicated to determine, after finding another device through scanning, whether the user identity information of the terminal device is the same as that of the another device, and then return only information about a trusted device whose user identity information is the same as that of the terminal device to the IAP service, that is, the operating system is indicated to perform step S206 and step S207.
b. The operating system is indicated to return, after finding other devices through scanning, information about all the other devices, but not determine whether user identity information is the same as that of the terminal device, and therefore, the operating system does not perform step S206 and step S207.
c. The terminal device is indicated to scan only one or more specified types of other devices, for example, scan only a large-screen display device, or scan only a large-screen display device and a smartwatch.
d. The operating system is indicated to scan only other devices within a specified distance around the terminal device, where a distance between the terminal device and the other devices may be determined by measuring a signal flight period or the like.

When the scanning policies configured by the scanning management unit for the operating system are different, there are also some differences in implementations in which the IAP service scores the current device usage environment of the terminal device. A person skilled in the art may flexibly make a change to the implementations based on the different scanning policies. This is not specifically limited in this embodiment of this application.

For example, when a scanning policy b is used, the operating system may send the information about all the other devices found through scanning, for example, the second device list, to a user information management unit of the IAP service. Therefore, the user information management unit may store the second device list.

A trustworthiness computing unit obtains, based on the weight value information configured by the factor management unit and considering weight values of other devices whose user identity information is the same as and different from that of the terminal device, the score of the current device usage environment.

For example, when the user identity information is a Huawei account, it is assumed that a logged-in Huawei account of the terminal device is USER01, and the other devices found by the terminal device through scanning include a large-screen display device whose logged-in Huawei account is USER0 1, and a smartwatch whose logged-in Huawei account is USER01, based on weight value information in the foregoing example, a weight value of the large-screen display device is 10, and a weight value of the smartwatch is 3. Therefore, the terminal device adds weight values of all the other devices, a score of the current device usage environment is 10 + 3 = 13 points.

For example, when the user identity information is a Huawei account, it is assumed that a logged-in Huawei account of the terminal device is USER01, and the other devices found by the terminal device through scanning include a smart speaker whose logged-in Huawei account is USER02, and a smartwatch whose logged-in Huawei account is USER0 1, based on weight value information in the foregoing example, a weight value of the smart speaker is 0, and a weight value of the smartwatch is 3. Therefore, a score of the current device usage environment is 0 + 3 = 3 points.

Then, the IAP service performs subsequent step S209, step S210, and the like based on a score that is of the current device usage environment and that is obtained by the trustworthiness computing unit.

In an implementation, when performing step S104, the terminal device may set a maximum scanning duration Tscan. The terminal device starts timing when the Wi-Fi module and/or the Bluetooth module start/starts scanning. When the maximum scanning duration Tscan is reached, the terminal device stops scanning, and generates a scanning result.

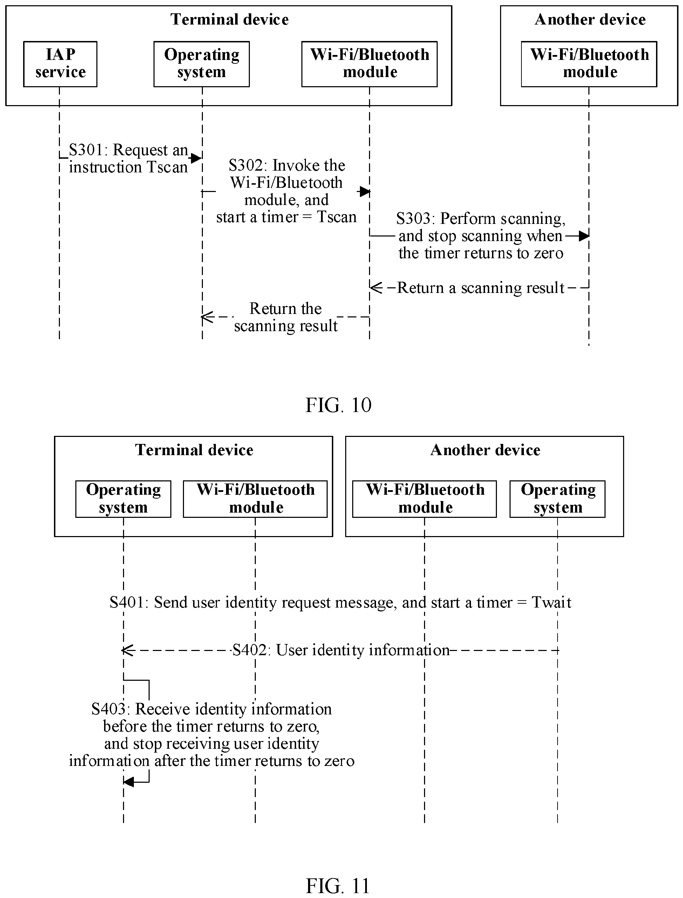

During specific implementation, as shown in FIG. 10, step S104 may include the following steps.

Step S301: The IAP service may send, to the operating system when receiving the authentication result that indicates that the merchant is valid, the request instruction used for obtaining the user identity information of the another surrounding device, where the request instruction also includes the maximum scanning duration Tscan.

Step S302: When receiving the request instruction from the IAP service, the operating system may invoke the Wi-Fi module of the terminal device to scan the another surrounding device connected to the terminal device through Wi-Fi, and/or may invoke the Bluetooth module to scan the another surrounding device connected to the terminal device through Bluetooth, while the operating system starts a timer = Tscan, to start timing.

Step S303: The Wi-Fi module and/or the Bluetooth module of the terminal device perform/performs the scanning process before the timer returns to zero, and send/sends a scanning result to the operating system.

During this period, the Wi-Fi module and/or the Bluetooth module may choose to report, to the operating system, a device identifier and a device type that are of each other device found through scanning, and stop/stops scanning until the timer returns to zero. Alternatively, the Wi-Fi module and/or the Bluetooth module do/does not report the scanning result during the scanning process, but stop/stops scanning after the timer returns to zero, and report/reports the scanning result to the operating system in a unified manner.

In this way, the maximum scanning duration Tscan is set, so that a period consumed by the terminal device to perform step S104 can be limited, to avoid that coherence of an in-app purchases procedure is affected due to an excessively long period consumed in step S104, and improve user payment experience.

In an implementation, when performing step S102, the terminal device may set a maximum waiting duration Twait. The terminal device starts timing when sending the user identity request message to other devices separately, and when the timing reaches the maximum waiting duration Twait, the terminal device stops receiving user identity information from the other devices.

During specific implementation, as shown in FIG. 11, step S105 may include the following steps.

Step S401: The operating system sends a user identity request message to each other device. At the same time, the operating system starts the timer = Twait, to start timing.

Step S402: An operating system of each other device sends user identity information of each other device to the terminal device in response to the user identity request message.

Step S403: The operating system receives the user identity information returned by each other device before the timer returns to zero, and stops receiving user identity information after the timer returns to zero.

It may be understood that, when the operating system stops receiving user identity information, the operating system may receive user identity information of all other devices, or may receive user identity information of some other devices. If another device does not return user identity information, it is considered that the user identity information of the another device is different from that of the terminal device.

In this way, the maximum waiting duration Twait is set, so that a period consumed by the terminal device to perform step S105 can be limited, to avoid that coherence of an in-app purchases procedure is affected due to an excessively long period consumed in step S105, and improve the user payment experience.

### Embodiment 2

Embodiment 2 of this application is applied to a scenario in which a terminal device completes an in-app purchases procedure by using another device. In Embodiment 2 of this application, an IAP service may be built in both the terminal device and each other device. A logical architecture of an IAP service of the terminal device may be shown in FIG. 6. An IAP service of each other device may include an in-app purchases cashier module in FIG. 6.

For content that is not specifically described in Embodiment 2 of this application, refer to Embodiment 1 of this application.

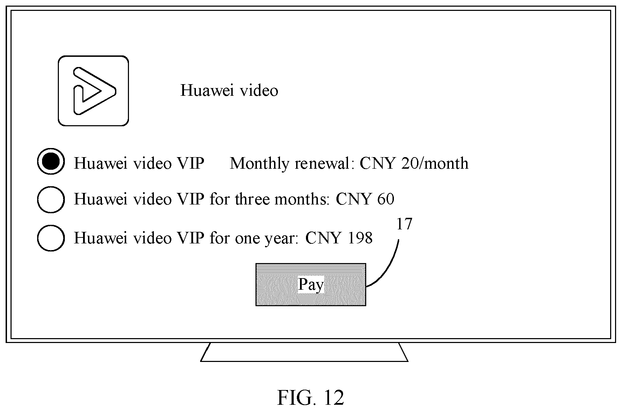

As shown in FIG. 12, when the terminal device is a large-screen display device, and a merchant application is a video application, if a user expects to purchase a video membership in the video application, the user selects information such as a corresponding membership product and duration by using a remote control, and then operates the remote control to click a "payment" button 17. In this case, the video application invokes an IAP service through an API provided by the IAP service, and transfers a product payment request to an in-app purchases cashier module of the IAP service.

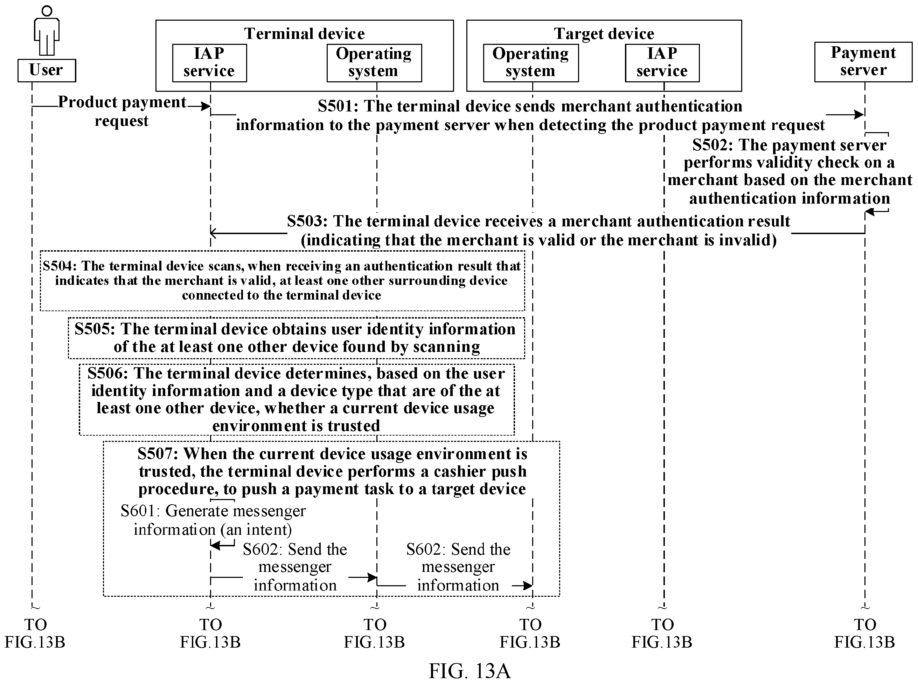

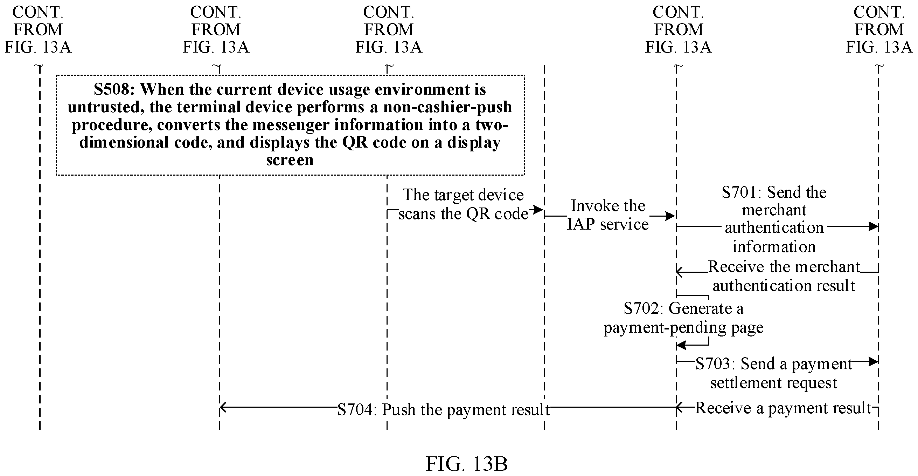

FIG. 13A and FIG. 13B are a diagram of a time sequence in which a terminal device completes an in-app purchases procedure by using another device according to this embodiment of this application.

As shown in FIG. 13A and FIG. 13B, that the terminal device completes the in-app purchases procedure by using the another device may include the following step S501 to step S509.

Step S501: An IAP service of the terminal device sends merchant authentication information to a payment server when detecting that a user submits a product payment request.

Step S501 is the same as step S101 in Embodiment 1 of this application. For details, refer to step S101. Details are not described herein again.

Step S502: The payment server performs validity check on a merchant based on the merchant authentication information after receiving the merchant authentication information.

During specific implementation, the payment server may verify, based on a merchant ID, whether the merchant is a merchant that has been registered in the payment server. When the merchant authentication information is encrypted information that has been signed, the payment server may verify validity of the merchant by performing signature check on the merchant authentication information. If the merchant is valid, the payment server generates a corresponding order, and sends, to the IAP service of the terminal device, an order token, namely, an order Token, used for identifying the order, where the order token may be implemented by using a URL. For example, the order token may include information such as an order number, an order placement channel, a merchant ID, an application ID, a product name, an order placement time, and a payment URL invoked by the order. After completing validity check on the merchant, the payment server may send a merchant authentication result obtained through check to the terminal device. When the merchant authentication result is that the merchant is valid, the merchant authentication result further includes the order token.

Step S503: The terminal device receives the merchant authentication result sent by the payment server.

Step S504: The terminal device scans, when receiving an authentication result that indicates that the merchant is valid and that is sent by the payment server, at least one other surrounding device connected to the terminal device.

Step S504 is the same as step S104 in Embodiment 1 of this application. For details, refer to step S104. Details are not described herein again.

Step S505: The terminal device obtains user identity information of the at least one other device found through scanning.

Step S505 is the same as step S105 in Embodiment 1 of this application. For details, refer to step S105. Details are not described herein again.

Step S506: The terminal device determines, based on the user identity information and a device type that are of the at least one other device found through scanning, whether a current device usage environment of the terminal device is trusted.

Step S506 is the same as step S106 in Embodiment 1 of this application. For details, refer to step S106.

For example, when the user identity information is a Huawei account, it is assumed that a logged-in Huawei account of the terminal device is USER01, and other devices found by the terminal device through scanning include a mobile phone whose logged-in Huawei account is USER01, and a smartwatch whose logged-in Huawei account is USER02, based on weight value information in the foregoing example, a weight value of the mobile phone is a first weight value of 2, and a weight value of the smartwatch is a first weight value of 3. Therefore, a score of the current device usage environment is 2 + 3 = 5 points.

For example, when the user identity information is a Huawei account, it is assumed that a logged-in Huawei account of the terminal device is USER01, and the other devices found by the terminal device through scanning include a smart speaker whose logged-in Huawei account is USER01, a smartwatch whose logged-in Huawei account is USER02, and a mobile phone whose logged-in Huawei account is USER01, based on weight value information in the foregoing example, a weight value of the smart speaker is a first weight value of 5, a weight value of the smartwatch is a second weight value of 0, and a weight value of the mobile phone is a first weight value of 2. Therefore, a score of the current device usage environment is 5 + 0 + 3 = 8 points.

Step S507: When the current device usage environment is trusted, the terminal device performs a cashier push procedure, to push a payment task to a target device.

In the cashier push procedure, as shown in FIG. 13A, the terminal device may specifically include the following step S601 to step S602.

Step S601: When the current device usage environment is trusted, the IAP service of the terminal device generates messenger information.

In an implementation, the messenger information may be generated by a routing decision unit.

The messenger information may include, for example, one or more pieces of information included in a product payment request and/or an order token. The messenger information may include, for example, a product name, an amount, a payment currency, a user ID, a merchant ID, a device type and a device ID that are of the terminal device, an order number, an order placement channel, an app ID, an order placement time, and a payment URL invoked by an order.

For example, in an Android system, the messenger information may be an Android intent object.

Step S602: The IAP service of the terminal device indicates an operating system to send the messenger information to the target device.

In an implementation, step S602 may be performed by the routing decision unit.

The target device is a device that is determined by the IAP service from all trusted devices found by the terminal device through scanning and that is used for assisting the terminal device in completing the in-app purchases procedure. The target device may be a device of a specified type like a mobile phone. When there are a plurality of devices of the specified type such as a mobile phone, the target device may be a device specified by the user in advance. If the user does not specify a device in advance, the target device may be a device closest to the terminal device, or a device currently in an active state, where the active state includes, for example, a device unlocked state, an active network connection state, and the like.

Step S508: When the current device usage environment is untrusted, the terminal device performs a non-cashier-push procedure, converts the messenger information into a QR code, and displays the QR code on a display.

Next, the user may scan the QR code by using a code scanning function of a payment application of the target device held by the user, and transfer the messenger information to the target device.

It can be learned that, regardless of whether the current device usage environment of the terminal device is trusted or untrusted, the target device needs to obtain information from the terminal device. A difference lies in that: When the current device usage environment of the terminal device is trusted, the terminal device actively pushes information to the target device. When the current device usage environment of the terminal device is untrusted, the terminal device displays the messenger information on the display in a form of the QR code, and the user needs to scan the QR code by using the code scanning function of the payment application of the target device, and transfers the messenger information to the target device.

When receiving the messenger information, the target device may replace, based on content included in the messenger information, the terminal device to perform a subsequent in-app purchases procedure. In an implementation, as shown in FIG. 13B, the target device may specifically perform the following step S701 to step S704.

Step S701: The target device sends the merchant authentication information to the payment server based on the messenger information.

During specific implementation, the operating system of the target device may invoke the IAP service through an API provided by the IAP service, and transfer the messenger information to an in-app purchases cashier module of the IAP service. The in-app purchases cashier module sends the merchant authentication information to the payment server based on the information. The merchant authentication information may include, for example, a product name, an amount, a payment currency, a user ID, a merchant ID, and a device type and a device ID of the terminal device, that are obtained from the messenger information.

Step S702: The target device generates a payment-pending page when receiving an authentication result that indicates that the merchant is valid and that is sent by the server.

The payment-pending page is shown in FIG. 8, and details are not described herein again.

Step S703: The target device sends a payment settlement request to the payment server when detecting that the user submits a product payment request on the payment-pending page.

During specific implementation, when an in-app purchases cashier module of an IAP service of the target device detects that the user selects a payment manner on the payment-pending page and taps "Confirm to pay", it means that the terminal device detects that the user submits the product payment request.

In an implementation, when detecting that the user submits the product payment request, the target device may first generate a user identity verification interface like a fingerprint verification interface, a payment password input interface, or a face verification interface, to guide the user to perform identity verification such as fingerprint verification, payment password input, or face verification. After the identity verification of the user succeeds, the in-app purchases cashier module submits the payment settlement request to the payment server. If the identity verification of the user fails, the in-app purchases cashier module terminates the payment procedure, and displays payment failure information.

Step S704: When receiving a payment result sent by the payment server, the target device sends the payment result to the terminal device.

It can be learned from the foregoing technical solutions that the identity verification method provided in Embodiment 2 of this application is applicable to the scenario in which the terminal device completes the in-app purchases procedure by using the another device. When detecting that the user submits the product payment request, the terminal device scans other surrounding devices that have been connected to the terminal device, and obtains user identity information of these devices. Then, the terminal device determines, based on the user identity information and device types that are of the other devices, whether the current device usage environment is trusted. If the current device usage environment is trusted, a cashier push payment procedure is performed. In this way, according to the identity verification method provided in this embodiment of this application, a quantity of times that the user manually scans QR codes to switch payment devices can be reduced while user payment security is ensured, and therefore, user payment experience is improved.

It should be additionally noted that the identity verification method provided in this embodiment of this application is applicable to another scenario in which identity verification needs to be performed in addition to a payment scenario. The following lists some common scenarios to describe feasibility of applying the method provided in this embodiment of this application to another scenario.

In an embodiment, the identity verification method provided in this embodiment of this application is applicable to a scenario in which a user changes an account password or retrieves an account password on a terminal device.

Usually, when the user needs to change or retrieve the password on the terminal device, the terminal device requires the user to perform identity verification, for example, verification using an SMS verification code, verification by answering a security question, and verification using an email. In a procedure of using an SMS verification code, after the user taps "send a verification code", the terminal device sends a verification code request message to a code sending server. The code sending server delivers the verification code to the terminal device in a form of an SMS message. The terminal device displays a page for the user to enter a new password only after the user enters the correct verification code. In a procedure of the verification by answering a security question, the terminal device first displays the security question preset by the user. The terminal device displays a page for the user to enter a new password only after the user inputs a correct answer to the security question. In a procedure of the verification using an email, after the user taps "verify secure email", the terminal device sends an email verification request message to an email verification server. The email verification server sends a verification link to the email preset by the user. Then, the user may tap the verification link in the email and enter a new password on a displayed link page, to complete a password change or retrieval procedure.

It can be learned that currently, when a user changes or retrieves a password on a terminal device, an identity verification operation that needs to be completed is complex, and user experience is reduced.

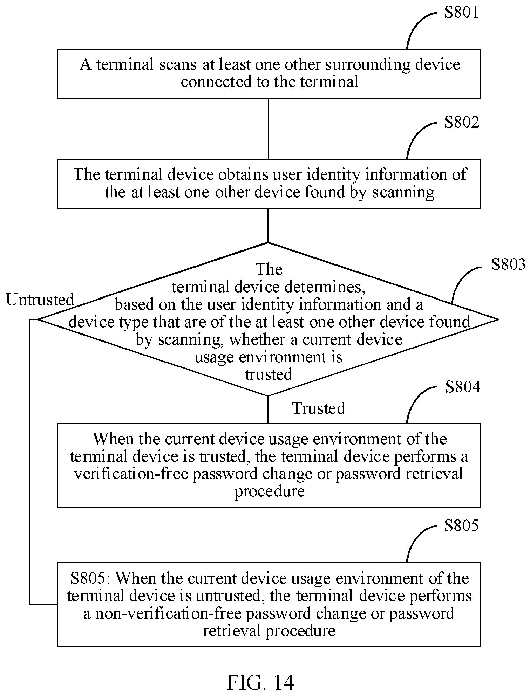

If the identity verification method provided in this embodiment of this application is used, as shown in FIG. 14, when the user changes or retrieves the password (for example, when the user taps "change password" or "retrieve password"), the terminal device may perform the following steps S801 to S805.

Step S801: The terminal scans at least one other surrounding device connected to the terminal.

For details about step S801, refer to step S104. Details are not described herein again.

Step S802 is the same as step S105, and step S803 is the same as step S106. Details are not described herein again.

Step S804: When the current device usage environment of the terminal device is trusted, the terminal device performs a verification-free password change or password retrieval procedure.

In the verification-free password change or password retrieval procedure, the terminal device does not require the user to perform identity verification such as verification using an SMS verification code, verification by answering a security question, or verification using an email, but directly displays a page for the user to enter a new password, which avoids a complex operation process.

Step S805: When the current device usage environment of the terminal device is untrusted, the terminal device performs a non-verification-free password change or password retrieval procedure.

In the non-verification-free password change or password retrieval procedure, considering that a person operating the terminal device may not be the owner, the terminal device performs a procedure like verification using an SMS verification code, verification by answering a security question, or verification using an email in a conventional identity verification manner.

It can be learned from the foregoing technical solutions that, when the identity verification method provided in this embodiment of this application is applied to the scenario in which the user changes the account password or retrieves the account password on the terminal device, user operations can be reduced and user experience can be improved when it is determined that the current device usage environment is trusted.

In another embodiment, the identity verification method provided in this embodiment of this application may be applied to a scenario in which a terminal device displays sensitive information.

Usually, when using the terminal device, a user receives some SMS messages including a verification code, a bank card number, a bank card balance, or an intimate utterance. These SMS messages are displayed in a notification bar of an operating system. Content in these SMS messages relates to property security and privacy security that are of the user, and is usually not expected to be seen by others. However, when the user is in a densely populated place like a subway, a bus, a station, a shopping mall, or a party, once the information is displayed on a display, it is easily seen by others.

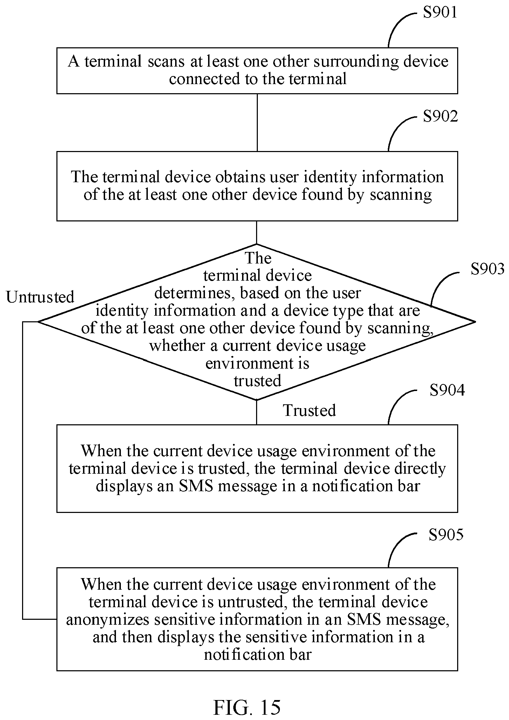

If the identity verification method provided in this embodiment of this application is used, as shown in FIG. 15, when receiving an SMS message including sensitive information, the terminal device may perform the following steps S901 to S905.

Step S901: The terminal scans at least one other surrounding device connected to the terminal.

For details about step S901, refer to step S104. Details are not described herein again.

Step S902 is the same as step S105, and step S903 is the same as step S106. Details are not described herein again.

Step S904: When a current device usage environment of the terminal device is trusted, the terminal device directly displays the SMS message in the notification bar.

Step S905: When the current device usage environment of the terminal device is untrusted, the terminal device anonymizes the sensitive information in the SMS message, and then displays the sensitive information in the notification bar.

During specific implementation, the terminal device may replace the sensitive information in the SMS message with some special characters.

For example, if original content of the SMS message is as follows:

Your credit card with a number ending with 6955 has an expense of CNY 800.

If an asterisk (*) is used for replacing the content, content of an anonymized SMS message is as follows:
Your credit card with a number ending with ^{∗∗∗∗} has an expense of CNY ^{∗∗∗∗}.

In this way, even if someone around the user sees the SMS message, no sensitive information can be obtained from the SMS message, which protects the property security and the privacy security of the user.

In the foregoing embodiments provided in this application, the solutions of the identity verification method provided in this application are described from perspectives of the terminal device and interaction between devices. It may be understood that, to implement the foregoing functions, each device like the terminal device includes a corresponding hardware structure and/or software module to perform each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

For example, the foregoing terminal device implements a corresponding function by using a hardware module.

In an embodiment, as shown in FIG. 4, an identity verification apparatus configured to implement a function of the terminal device includes: a processor 110, a memory 120, a transceiver, and a memory 120 and a processor 110. The memory 120 includes program instructions. When the program instructions are run by the processor 110, the terminal device is enabled to perform the following steps: scanning, when detecting that a user submits a product payment request, at least one other surrounding device connected to the terminal device; obtaining user identity information of the at least one other device; determining, based on the user identity information and a device type that are of the at least one other device, whether a current device usage environment is trusted, where the device type is obtained from the at least one other device when the terminal device establishes a connection to the at least one other device; and if the current device usage environment is trusted, performing a password-free payment procedure, or push a payment procedure to a target device, to enable the target device to replace the terminal device to perform a non-password-free payment procedure; or if the current device usage environment is untrusted, performing the non-password-free payment procedure.

In this way, when detecting that the user submits the product payment request, the terminal device scans other surrounding devices that have been connected to the terminal device, and obtains user identity information of these devices. Then, the terminal device determines, based on the user identity information and device types that are of the other devices, whether the current device usage environment is trusted. If the current device usage environment is trusted, the password-free payment procedure is performed. In this way, according to the identity verification method provided in this embodiment of this application, a quantity of times that the user manually performs identity verification can be reduced while user payment security is ensured, and therefore, user payment experience is improved.

Optionally, the memory 120 stores a weight value of at least one device type, each device type includes a first weight value and a second weight value, and the first weight value of each device type is greater than the second weight value of the device type.

Optionally, the program instructions further enable the terminal device to perform the following steps, to determine, based on the user identity information and the device type that are of the at least one other device, whether the current device usage environment is trusted: determining, from the at least one other device, a trusted device whose user identity information is the same as that of the at least one other device; determining a weight value of each trusted device based on a device type of the trusted device; adding weight values of all trusted devices to obtain a score of the current device usage environment; and if the score of the current device usage environment falls within a first score interval, determining that the current device usage environment is trusted; or if the score of the current device usage environment falls within a second score interval, determining that the current device usage environment is untrusted, where the first score interval is higher than the second score interval. In this way, the terminal device may score the current device usage environment based on the user identity information, the type, a quantity, and the weight value of each other device. A higher score of the current device usage environment indicates higher trustworthiness of the current device usage environment. When the score falls within the first score interval, it is determined that the current device usage environment is trusted.

Optionally, the weight value of the trusted device is a first weight value of the device type of the trusted device.

Optionally, the program instructions further enable the terminal device to perform the following steps, to determine, based on the user identity information and the device type that are of the at least one other device, whether the current device usage environment is trusted: determining a weight value of each other device based on user identity information and a device type of each other device; adding weight values of all other devices to obtain a score of the current device usage environment; and if the score of the current device usage environment falls within a first score interval, determining that the current device usage environment is trusted; or if the score of the current device usage environment falls within a second score interval, determining that the current device usage environment is untrusted, where the first score interval is higher than the second score interval. In this way, the terminal device may score the current device usage environment based on the user identity information, the type, a quantity, and the weight value of each other device. A higher score of the current device usage environment indicates higher trustworthiness of the current device usage environment. When the score falls within the first score interval, it is determined that the current device usage environment is trusted.

Optionally, the program instructions further enable the terminal device to perform the following steps, to determine the weight value of each other device based on the user identity information and the device type that are of each other device: when user identity information of the terminal device is the same as that of each other device, the weight value of each other device is equal to a first weight value of the device type of each other device; or when user identity information of the terminal device is different from that of each other device, the weight value of each other device is equal to a second weight value of the device type of each other device.

Optionally, the device type includes at least one or more of a large-screen display device, a smartwatch, a mobile phone, a smart speaker, and a notebook computer, where a first weight value of the large-screen display device is greater than a first weight value of another device type.

Optionally, the second weight value of each device type is 0.

Optionally, the program instructions further enable the terminal device to perform the following step, to push the payment procedure to the target device: sending messenger information to the target device, where the messenger information is used for indicating the target device to perform the non-password-free payment procedure. In this way, according to the method in this embodiment of this application, the payment procedure is pushed, so that a quantity of times that the user manually scans QR codes to switch payment devices can be reduced, and therefore, the user payment experience is improved.

Optionally, the target device is determined by the terminal device from the at least one other device, and the target device includes a device of a specified type, a device specified by the user in advance, or a device that is currently in an active state.

Optionally, the program instructions further enable the terminal device to perform the following step, to scan, when detecting that the user submits the product payment request, the at least one other surrounding device connected to the terminal device: scanning, based on a merchant authentication result of a payment server, the at least one other surrounding device connected to the terminal device, when detecting that the user submits the product payment request.

Optionally, the program instructions further enable the terminal device to perform the following steps, to scan, based on the merchant authentication result of the payment server, the at least one other surrounding device connected to the terminal device, when it is detected that the user submits the product payment request: sending merchant authentication information to the payment server when detecting that the user submits the product payment request, to enable the payment server to perform validity check on a merchant based on a signature of the merchant authentication information, to obtain the merchant authentication result, where the merchant authentication result includes that the merchant is valid and that the merchant is invalid; receiving the merchant authentication result sent by the payment server; and scanning, when the received merchant authentication result is that the merchant is valid, the at least one other surrounding device connected to the terminal device. In this way, the terminal device scans another device only when the merchant is valid, to avoid some unnecessary scanning procedures.

Optionally, the program instructions further enable the terminal device to perform the following step, to scan the at least one other surrounding device connected to the terminal device. The steps include: scanning, by using a wireless communication module, at least one other surrounding device wirelessly connected to the terminal device.

Optionally, the wireless communication module includes a wireless fidelity Wi-Fi module and/or a Bluetooth module, and the program instructions further enable the terminal device to perform the following step, to scan, by using the wireless communication module, the at least one other surrounding device wirelessly connected to the terminal device: invoking the Wi-Fi module to scan the at least one other surrounding device connected to the terminal device through Wi-Fi, and/or invoking the Bluetooth module to scan the at least one other surrounding device connected to the terminal device through Bluetooth.

Optionally, the program instructions further enable the terminal device to perform the following steps, to obtain the user identity information of the at least one other device: sending user identity request information to each other device; and receiving the user identity information that is sent by each other device in response to the user identity request information.

For example, the foregoing terminal device implements a corresponding function by using a software module.

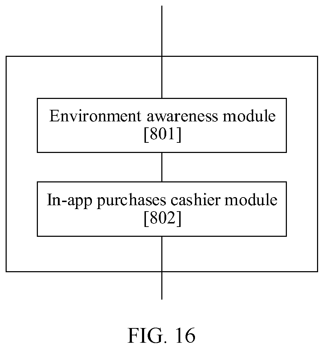

In an embodiment, as shown in FIG. 16, an identity verification apparatus configured to implement a function of the terminal device includes:
an environment awareness module 801, configured to: scan, when detecting that a user submits a product payment request, at least one other surrounding device connected to the terminal device; obtain user identity information of the at least one other device, and determine, based on the user identity information and a device type that are of the at least one other device, whether a current device usage environment is trusted, where the device type is obtained from the at least one other device when the terminal device establishes a connection to the at least one other device; and an in-app purchases cashier module 802, configured to: perform a password-free payment procedure when the current device usage environment is trusted, or push a payment procedure to a target device, to enable the target device to replace the terminal device to perform a non-password-free payment procedure; and perform the non-password-free payment procedure when the current device usage environment is untrusted.

In this way, when detecting that the user submits the product payment request, the terminal device scans other surrounding devices that have been connected to the terminal device, and obtains user identity information of these devices. Then, the terminal device determines, based on the user identity information and device types that are of the other devices, whether the current device usage environment is trusted. If the current device usage environment is trusted, the password-free payment procedure is performed. In this way, according to the identity verification method provided in this embodiment of this application, a quantity of times that the user manually performs identity verification can be reduced while user payment security is ensured, and therefore, user payment experience is improved.

Optionally, the environment awareness module 801 is further configured to send messenger information to the target device, where the messenger information includes a product payment request, to enable the target device to send a merchant authentication request to a payment server based on the messenger information and perform the non-password-free payment procedure when receiving an authentication result that indicates that the merchant is valid and that is sent by the payment server. In this way, when detecting that the user submits the product payment request, the terminal device scans other surrounding devices that have been connected to the terminal device, and obtains user identity information of these devices. Then, the terminal device determines, based on the user identity information and device types that are of the other devices, whether the current device usage environment is trusted. If the current device usage environment is trusted, a cashier push payment procedure is performed. In this way, according to the identity verification method provided in this embodiment of this application, a quantity of times that the user manually scans QR codes to switch payment devices can be reduced while user payment security is ensured, and therefore, user payment experience is improved.

An embodiment of this application further provides a computer storage medium. The computer storage medium stores computer instructions. When the computer instructions are run on a computer, the computer is enabled to perform the method according to the foregoing aspects.

An embodiment of this application further provides a computer program product including instructions. When the instructions are run on a computer, the computer is enabled to perform the method according to the foregoing aspects.

This application further provides a chip system. The chip system includes a processor for supporting the foregoing apparatus or device in implementing a function in the foregoing aspects, for example, generating or processing information in the foregoing method. In a possible design, the chip system further includes a memory for storing program instructions and data that are necessary for the foregoing apparatus or device. The chip system may include a chip, or may include a chip and another discrete component.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, or the like made within the spirit and principle of the present invention shall fall within the protection scope of the present invention.

## Claims

1. An identity verification method, comprising:
scanning, by a first terminal device when detecting that a user submits a product payment request, at least one surrounding second terminal device connected to the first terminal device;
obtaining, by the first terminal device, user identity information of the at least one second terminal device;
determining, by the first terminal device based on the user identity information and a device type that are of the at least one second terminal device, whether a current device usage environment is trusted, wherein the device type is obtained from the second terminal device when the first terminal device establishes a connection to the second terminal device;
performing, by the first terminal device, a password-free payment procedure when the current device usage environment is trusted, or pushing, by the first terminal device, a payment procedure to a third terminal device, to enable the third terminal device to replace the first terminal device to perform a non-password-free payment procedure; and
performing, by the first terminal device, the non-password-free payment procedure when the current device usage environment is untrusted.

2. The method according to claim 1, wherein the first terminal device stores a weight value of at least one device type, each device type comprises a first weight value and a second weight value, and the first weight value of each device type is greater than the second weight value of the device type.

3. The method according to claim 2, wherein the determining, by the first terminal device based on the user identity information and a device type that are of the at least one second terminal device, whether a current device usage environment is trusted comprises:
determining, by the first terminal device from the at least one second terminal device, a trusted device whose user identity information is the same as that of the first terminal device;
determining, by the first terminal device, a weight value of each trusted device based on a device type of the trusted device;
adding, by the first terminal device, weight values of all trusted devices to obtain a score of the current device usage environment; and
determining, by the first terminal device based on the score of the current device usage environment, whether the current device usage environment is trusted.

4. The method according to claim 3, wherein the weight value of the trusted device is a first weight value of the device type of the trusted device.

5. The method according to claim 2, wherein the determining, by the first terminal device based on the user identity information and a device type that are of the at least one second terminal device, whether a current device usage environment is trusted comprises:
determining, by the first terminal device, a weight value of each second terminal device based on the user identity information and the device type that are of the second terminal device;
adding, by the first terminal device, weight values of all second terminal devices to obtain a score of the current device usage environment; and
determining, by the first terminal device based on the score of the current device usage environment, whether the current device usage environment is trusted.

6. The method according to claim 5, wherein the determining, by the first terminal device, a weight value of each second terminal device based on the user identity information and the device type that are of the second terminal device comprises:
when user identity information of the first terminal device is the same as that of the second terminal device, the weight value of the second terminal device is equal to a first weight value of the device type of the second terminal device; or
when user identity information of the first terminal device is different from that of the second terminal device, the weight value of the second terminal device is equal to a second weight value of the device type of the second terminal device.

7. The method according to any one of claims 3 to 6, wherein the determining, by the first terminal device based on the score of the current device usage environment, whether the current device usage environment is trusted comprises:
if the score of the current device usage environment falls within a first score interval, determining, by the first terminal device, that the current device usage environment is trusted; or
if the score of the current device usage environment falls within a second score interval, determining, by the first terminal device, that the current device usage environment is untrusted.

8. The method according to any one of claims 2 to 7, wherein the device type comprises at least one or more of a large-screen display device, a smartwatch, a mobile phone, a smart speaker, and a notebook computer, wherein a first weight value of the large-screen display device is greater than a first weight value of another device type.

9. The method according to claim 8, wherein the second weight value of each device type is 0.

10. The method according to any one of claims 1 to 9, wherein the pushing, by the first terminal device, a payment procedure to a third terminal device comprises: sending, by the first terminal device, messenger information to the third terminal device, wherein the messenger information indicates the third terminal device to perform the non-password-free payment procedure.

11. The method according to any one of claims 1 to 10, wherein the third terminal device is determined by the first terminal device from the at least one second terminal device, and the third terminal device comprises a device of a specified type, a device specified by the user in advance, or a device that is currently in an active state.

12. The method according to any one of claims 1 to 11, wherein the scanning, by a first terminal device when detecting that a user submits a product payment request, at least one surrounding second terminal device connected to the first terminal device comprises: scanning, by the first terminal device based on a merchant authentication result of a payment server, the at least one surrounding second terminal device connected to the first terminal device, when detecting that the user submits the product payment request.

13. The method according to claim 12, wherein the scanning, by the first terminal device based on a merchant authentication result of a payment server, the at least one surrounding second terminal device connected to the first terminal device, when detecting that the user submits the product payment request comprises:
sending, by the first terminal device, merchant authentication information to the payment server when detecting that the user submits the product payment request, to enable the payment server to perform validity check on a merchant based on a signature of the merchant authentication information, to obtain the merchant authentication result, wherein the merchant authentication result comprises that the merchant is valid and that the merchant is invalid;
receiving, by the first terminal device, the merchant authentication result sent by the payment server; and
scanning, by the first terminal device when the received merchant authentication result is that the merchant is valid, the at least one surrounding second terminal device connected to the first terminal device.

14. The method according to any one of claims 1 to 13, wherein the scanning, by a first terminal device, at least one surrounding second terminal device connected to the first terminal device comprises: scanning, by the first terminal device by using a wireless communication module, at least one surrounding second terminal device wirelessly connected to the first terminal device.

15. The method according to claim 14, wherein the wireless communication module comprises a wireless fidelity Wi-Fi module and/or a Bluetooth module, and the scanning, by the first terminal device by using a wireless communication module, at least one surrounding second terminal device wirelessly connected to the first terminal device comprises: invoking, by the first terminal device, the Wi-Fi module to scan at least one surrounding second terminal device connected to the first terminal device through Wi-Fi, and/or invoking, by the first terminal device, the Bluetooth module to scan at least one surrounding second terminal device connected to the first terminal device through Bluetooth.

16. The method according to claim 1, wherein the obtaining, by the first terminal device, user identity information of the at least one second terminal device comprises:
sending, by the first terminal device, user identity request information to each second terminal device; and
receiving, by the first terminal device, user identity information that is sent by each second terminal device in response to the user identity request information.

17. The method according to any one of claims 1 to 16, wherein the first terminal device performs the password-free payment procedure when the first terminal device is a mobile phone and the current device usage environment is trusted.

18. The method according to any one of claims 1 to 16, wherein the first terminal device pushes the payment procedure to the third terminal device when the first terminal device is the large-screen display device and the current device usage environment is trusted.

19. An identity verification apparatus, used as a first terminal device, wherein the apparatus comprises a processor and a memory, a transceiver, and a memory and a processor, and the memory comprises program instructions; and when the program instructions are run by the processor, the first terminal device is enabled to perform the method according to any one of claims 1 to 18.

20. An identity verification system, comprising: a first terminal device and at least one second terminal device, wherein
the first terminal device is configured to scan, when detecting that a user submits a product payment request, at least one surrounding second terminal device connected to the first terminal device;
the first terminal device is further configured to send user identity request information to each second terminal device found through scanning;
the second terminal device is configured to send user identity information of the second terminal device to the first terminal device in response to the user identity request information;
the first terminal device is further configured to determine, based on the user identity information and a device type that are of the at least one second terminal device found through scanning, whether a current device usage environment is trusted, wherein the device type is obtained from the second terminal device when the first terminal device establishes a connection to the second terminal device;
the first terminal device is further configured to perform a password-free payment procedure when the current device usage environment is trusted, or push a payment procedure to a third terminal device, to enable the third terminal device to replace the first terminal device to perform a non-password-free payment procedure; and
the first terminal device is further configured to perform the non-password-free payment procedure when the current device usage environment is untrusted.

21. A chip system, comprising: a memory and a processor, wherein the memory stores computer program instructions; and when the program instructions are executed by the processor, the chip system is enabled to implement a function of any terminal device according to any one of claims 1 to 18.
